# EUROPEAN PATENT APPLICATION

(11) **EP 2 278 357 A2**
(43) Date of publication of application: **26.01.2011**
(21) Application number: 10188442.7
(22) Date of filing: 26.03.2008
(51) Int. Cl.: G01S 17/89, G01S 17/88, G01S 17/87, G01S 17/46, G01S 19/46

(54) **A method and a device for determining the position of a vehicle for the autonomous driving of a vehicle, in particular a robotized vehicle**

(62) Divisional of application: 08718223.4
(71) Applicant: Genova Robot SRL, 16151 Genova (IT)
(72) Inventor: Zaccaria, Renato, 16126 Genova (IT); Vernazza, Tullio, 16043 Genova (IT); Sgorbissa, Antonio, 16123 Genova (IT); Mastrogiovanni, Fulvio, 16139 Genova (IT); Capezio, Francesco, 17052 Savona (IT)
(74) Representative: Karaghiosoff, Giorgio Alessandro

(57) **Abstract**

A method for determining the pose of a vehicle, in particular a robotized vehicle, which comprises the following steps:
to correct at least one position information which is provided by at least one remote device through a comparison with at least one position information provided by at least one local device which is associated with the vehicle itself.

The invention comprises also a device for realizing such a method.

## Description

The present invention refers to both a method and a device for determining the pose of a vehicle and for the autonomous driving of a vehicle, in particular a robotized vehicle.

Methods and devices of the aforementioned type are known and used.

Although they accomplish their function in a satisfactory manner, they are characterized by a number of drawbacks.

According to state-of-the-art techniques, a precise vehicle localization in a geographical area can be performed using several approaches: the first one is the use of a satellite-based system. Such a satellite-based system, e.g., the well-known GPS (Global Positioning System) is such that one or a number of satellites send to a receiver located on the earth one or more data, which are expressed into geographical coordinates, which identify the geographical position of the receiver itself. The precision which can be attained by the GPS system is about 10-20 meters, which can be sufficient in several either non-technical or system specific applications, but not enough to allow their use when a more precise localization is needed, or with an error with a smaller order of magnitude.

For instance, GPS cannot be used as a localization system for an autonomous mobile robot since the individual information is affected by a too big uncertainty (about 10 meters). In order to perform a precise automous navigation, a localization that is characterized by an error smaller that one meter must be available. For instance, an improved precision is necessary to allow a robotized vehicle to navigate autonomously and/or to move in cluttered spaces which are typical of human-centered environments, such as storage or parking sites, roads etc., or even doors and passages.

Furthermore, the localization error of the GPS is not constant, but it differs from geographical area to geographical area, and varies also according to atmospherical conditions, depending on the good or limited satellite or satellites visibility from earth, otherwise depending on the satellites position themselves; therefore, it can be said that the GPS error is characterized by a statistics which is not amenable to provide estimations or calculations, therefore being impossible to be removed without using other devices to be added to the system.

Obviously enough, according to current state-of-the-art techniques, a system called differential GPS can be used, i.e., a couple of integrated GPS systems, where a fixed device located in a known position serves as reference to the other mobile device.

Two GPS receivers are then used, the former located within a fixed station near the geographical area where the vehicle which pose must be computed navigates, the latter located on board of the vehicle itself. Satellite data received by both the fixed station and the mobile device are compared, thus producing two different pose estimations, and since the GPS errors are similar, by computing their difference it is possible to reduce to a greater extent the error characterizing the mobile device, because the position of the fixed station is known, and therefore it allows an estimation of the GPS error.

However, the differential GPS is very expensive to install and it requires a continuous radio link between the fixed station and the mobile device, in order to be able to compare data or geographical coordinates and to evaluate the error, correcting through this evaluation the estimate of the geographical coordinates of the mobile device.

Furthermore, when using the differential GPS, each GPS measurement is adjusted from the differential system itself using the aforementioned comparison, thus producing a significant increase of the computational requirements of the localization system, which, for each measurement of the geographical coordinates characterizing the mobile device, has to:
receive the single measurement or GPS geographical coordinate of the mobile device,
receive the single measurement of the fixed station,
compute the error between the coordinate provided by the GPS system and the real known geographical coordinate of the fixed station,
apply a correction factor, which is proportional to the aforementioned error, to the geographical coordinate received from the GPS system with respect to the position of the mobile device. This procedure is repeated for each GPS measurement.

The invention is therefore based on the problem of realizing a method for detecting the pose, or geographical localization of a vehicle, in particular of a robotized vehicle, and specifically of a vehicle amenable to autonomously navigate within environments which have been designed for humans, which allows to improve the detection of the vehicle pose thus reducing the error below thresholds which are typically accepted with respect to the dimensions of environments designed to be used by humans, with the maximum working simplicity and safety as possible, in order to keep costs for realization, use and maintenance of all the devices which are necessary for implementing the aforementioned method as low as possible.

The invention is also aimed at realizing a device for implementing such a method.

This invention solves the introduced problem using a method for determining the pose, or geographical localization, of a vehicle, in particular a robotized vehicle, which comprises the following steps:
To correct at least a position measurement provide by at least one device of a remote type through a comparison with at least a position measurement detected by at least another device of a local type that is associated to the vehicle.

In particular, with the definition "device of local type" that is associated to the vehicle, the computation of the pose using reference fixed points through detection of distances and heading directions of the aforementioned points from the vehicle is intended, and for determining the pose by tracking and/or by introducing distance and/or orientation within a known map comprising the aforementioned fixed points. With respect to the local device, reference fixed points are expected to lie within the workspace, otherwise within the local environment, for instance a building, a wall, or similar.

Either alternatively or in combination with this reference points, it is possible also to use object's shapes or dimensions which are expected to lie within the environment where the vehicle moves in.

In substance, and disregarding the actual method for determining either directional or distance measurements of either object's shapes or dimensions, the idea is the same, e.g., of the systems which determine the pose through triangulation or trilateration, such those methods used for determining the pose in nautical applications, for sight or coastal navigation.

In this way the method, according to this invention, solves the drawbacks related to state-of-the-art approaches, since it does not require the availability of a fixed structure to generate a correction for the pose measurement, preferably in geographical coordinates. The correction of the pose signal of the vehicle occurs directly on board the mobile vehicle, and this profitably allows to come through the drawbacks related to state-of-the-art approaches.

According to a preferred embodiment, the method for detecting the position of a vehicle according to this invention comprises the following steps:
to detect at least a first measurement or a first series of pose measurements, referred to as remote measurements, through a remote position detection device
to detect at least a second measurement or a second series of pose measurements, referred to as local measurements, through a local position detection device
to compare the first and the second measurement or the first series and the second series
to retrieve from this comparison a third measurement or a third series of measurements, referred to as position correcting measurements
to detect at least another first measurement or another first series of position measurements, referred to as remote measurements, through a position detection device of a remote type.
to correct this additional first measurement or this additional first series of measurements through position correcting measurements.

The method that is related to the present invention states that the vehicle either receives or detects a first measurement, referred to as remote measurement, or a first series of measurements, specifically geographical coordinates from a remote system, where with remote system we refer for instance to a satellite-based system, such as the aforementioned GPS. This remote measurement is the detection provided by the GPS of the geographical coordinates of the vehicle, otherwise of the GPS receiver which is located on board the vehicle itself. The measurement, as it has been previously discussed, is affected by an error of about 10 meters. Next, the method assumes that on the vehicle a local device for position estimation is installed, otherwise a detecting device which is associated to the vehicle only, and located on board the vehicle itself. This local positioning device can be, for instance, an optical, otherwise acoustical device, or similar.

According to a preferred embodiment, the detection device of a local type is an optical device such as a laser rangefinder able to estimate with a sufficient precision the distance of obstacles located at various positions, preferably but not limited to distances which are less that 1 meter and up to 50 meters. The laser rangefinder is mounted on the vehicle and it allows the vehicle itself to detect shapes and positions, both absolute and with respect to the vehicle itself, of the surrounding objects. Objects can be indifferently artifacts which shape and position are known, otherwise buildings or natural terrain shape surrounding the vehicle, or similar, of which at least a number of them have a known shape and a known position, otherwise a known and precise geographical coordinate.

The laser rangefinder is connected to a computational device which, on the basis of the knowledge of both profiles and position of the detected objects, produces an estimate of the actual vehicle pose.

This estimate, merged through statistical methods with the measurement provided by the GPS, can be used to reduce the GPS localization error, profitably also to reduce this error down to values which are compatible with autonomous navigation requirements.

During the navigation following this improvement in the GPS measurement, a mathematical model maintains low the error for a period which is sufficient to wait for a new laser rangefinder measurement, with respect to the next detected object.

Profitably, whereas in the differential GPS, according to the state-of-the-art techniques, each GPS measurement is corrected by the differential system, in the method presented by this invention only few GPS measurements are corrected, in a pseudo-periodic fashion, according to the measurement performed by the laser rangefinder with respect to a known object that is encountered during the navigation, and a mathematical model corrects the GPS error also for subsequent localizations.

With "a proper mathematical model" we refer to whatsoever mathematical or statistical model, or computational algorithm, e.g., in a preferred embodiment a KALMAN model or KALMAN filter is profitably used. The KALMAN filter is a well-known algorithm used for data filtering that is based on a proper mean computed over the next foreseen value and the next estimated value. This filter is often used to obtain a better estimation of a measurement that is obtained from the readings of several sensors, each one characterized by a measurement model with different time dependent features (and therefore in the frequency domain). Further information on the KALMAN filter or the KALMAN algorithm can be found in scientific literature, specifically in the publication "An introduction to the Kalman filter" (Department of Computer Science University of North Carolina at Chapel Hill TR 95-041), or on the on-line encyclopedia WIKIPEDIA (www.wikipedia.org).

Alternatively or in combination, it is possible to prefigure the use of Bayesian methods, which description in the scientific literature can be found on the on-line encyclopedia WIKIPEDIA (www.wikipedia.org), or in scientific textbooks, and/or different statistical methods, such as methods for error computation and/or perturbation calculus, which are commonly used in physical and mathematical fields.

Experimental results and the study of the GPS error process showed that, in open spaces, the frequency of the measurements provided by the laser rangefinder can be very low (therefore very few objects are necessary during navigation) for an effective error compensation, with the remarkable advantage of a noticeably diminished computational load of the vehicle and the possibility to avoid the use of a fixed station.

For instance, for either a mobile robot or a vehicle performing surveillance tasks within an area with buildings, detected objects can be building profiles or static artifacts which distance is tenths of meters or even more, depending on the desired precision.

According to alternative embodiments, it is possible to use as a local sensor a sensor based on bearing measurements rather than the distance of known targets, such as a rotating laser measuring the reflective angle of reflecting targets located in known places, or like the so-called DLPS, based on a rotating laser for transmission and several transponder which are placed in known locations. In both the systems the pose estimate used to control the error in the GPS measurement is carried out by computing the measurements of the headings in correspondence to which either targets or transponders are detected.

Therefore, profitably this invention solves problems related to the current state-of-the-art, providing a method for detecting precise geographical coordinates, otherwise called localization process, with a displacement of about 1 meter or less, without a fixed station or a radio link with it for the error evaluation.

Another advantage is given by the fact that the GPS error and, consequently, the correcting measurement which is computed is related to the very same position of the GPS receiver on the vehicle: in other words, whereas in state-of-the-art systems the error and consequently the correction factor are evaluated with respect to a fixed location and therefore used to correct the geographical coordinates of the mobile device, that can be affected by an error in principle noticeably different from the one characterizing the fixed station, with this invention the error evaluation and the computation of the coefficient or correcting measurement is computed directly using the geographical coordinates of the mobile device, which allows a superior precision.

The device implementing the method according to the present invention has also a computational unit in which either GPS data related to the remote location of the vehicle, or local data related to the distance from one or more known objects are sent. The computational unit then computes the geographical coordinate locally, based on local data, and compares them with the remote geographical coordinates, for example provided by GPS. The control unit by means of the above comparison, and for example with the use of a KALMAN filter, generates a correction coefficient or data which corrective action is applied to remote geographical coordinates. This correction coefficient or corrective action is then used, for example, to move further the vehicle correcting the new data or the remote geographical coordinates detected by GPS. Therefore, each subsequent vehicle movement based on either remote geographical coordinates detected by the remote system or a remote sensing device, such as the GPS installed on the vehicle, is updated and corrected using a filter, such as the KALMAN filter, in order to generate new geographical coordinates and to correct any movement of the vehicle.

Every time the vehicle navigates, detecting, through the local detection device, a well-known profile or a profile with known geographic coordinates and corresponding entries stored in its database, the computational unit generates a new correction factor or a new correction that will be applied to subsequent GPS measurements. Repeating the procedure or the above method results in a vehicle which is able to estimate with a high degree of accuracy its geographical location, i.e., its position in terms of geographical coordinates.

A further object of this invention is an autonomous terrestrial vehicle that can detect precise geographical coordinates, in particular of the order of 1 meter, the aforementioned vehicle being provided by
at least one device for pose detection of a remote type
at least one device for pose detection of a local type
at least one computational unit.

This invention relates also to a sensing device for detecting the physical features of a two-dimensional or a three-dimensional environment, in particular for the geographical localization of a mobile robot. This sensing device can be used as a preferred device for pose detection of the local type according to the preceding defintiions.

As already disclosed the sensing devices of the aforementioned type are used in Mobile Robotics, in particular, for the autonomous navigation of mobile robots, and are aimed at determining the robot pose with respect to the surrounding environment, and in particular with respect to the obstacles which are present in the environment or which are defined on the basis of the environment itself.

One of the fundamental aspects in Mobile Robotics is to allow the robots to autonomously localize themselves within the environment. The estimation of both the robot position and heading within the workspace can be carried out using different techniques, for example through Cartesian-based localization, otherwise the robot pose is encoded with a reference frame representing the robot position and orientation with respect to a fixed reference system, otherwise through localization over a topological map. Alternatively, the robot localization can be carried out through techniques measuring the new robot pose on the basis of a known position or through methods computing the absolute robot pose in the environment without the need for a previous estimation.

Therefore, it is evident that the autonomous mobile robot must be provided with a device for detecting its position, in particular with sensors for detecting the relative displacement, which provide information regarding the robot displacement in a given temporal window such as encoders or similar, and proximity sensors performing metric measurements with respect to the objects within the environment.

Proximity sensors allow a robot to infer its distance and orientation with respect to obstacles which are present within the environment. The set of all the distinctive features of an environment, the so-called landmarks, which the robot can recognize using the sensing device it is provided with, and which allow the robot to interact with the environment knowing both its metric and topological characteristics, can be natural, i.e., objects which are present within the environment, or artificial, i.e., objects purposively placed and designed to maximize the difference with respect to the background, thus allowing an easier localization and navigation processes for the robot within the environment. During the localization process, the robot is able to recognize the landmarks, which position and/or shape and/or dimensions have been previously acquired by the robot during the training phase, and to compute its position with respect to the landmarks recognized by the sensing device.

The acquisition of information from the environment can be carried out through vision systems, such as cameras, otherwise sensors emitting energy in the environment, and using the reflected energy to compute the distance and the heading, otherwise angular position, of the objects with respect to the robot. The aforementioned sensors can be made up of sonars, which use as energy source an ultrasound emitter, of radars, exploiting electromagnetic waves, or of laser scanners, using lighting energy.

Sensor devices of the aforementioned type are well-known and widely used; although the aforementioned devices perform their tasks in a satisfactory manner, they are characterized by a number of drawbacks.

Sensor devices which are based on vision, in particular in the case they are used for artificial landmarks based localization, are characterized by the fact that vision-based recognition is not optimal, but it can vary depending on both the position and the orientation of the robot with respect to the landmarks.

Sonars are devices which exploit the physical characteristics of the ultrasounds to obtain information concerning both objects distance and heading within the environment. Unfortunately, the ultrasound device is slower and less precise with respect to laser devices, since it is not possible to precisely direct the emitted beam and, given the limited sound speed through the air, it is not possible to obtain measurements with a rate which is enough to obtain precise information for the autonomous robot navigation.

Radars are mainly used in open spaces and are not suitable to be used to control the robot navigation in cluttered environments.

The light source used by laser rangefinders is a laser diod: the beam which is emitted from such a device is oriented towards its direction to analyze the environment, and a sensor, in particular a fotodiod, is able to measure the fase difference and the echo interval. The use of lighting energy allows for the availability of updating frequencies which are more tight than those which can be obtained through the use of acoustic waves. Furthermore, given the intrinsic laser characteristics, it is possible to direct the laser towards objects or landmarks located within the environment with high precision. The use of just laser rangefinders does not allow for a high accuracy in determining object distances; in particular, a scanning laser used without any other sensor is able to measure the distance of the part of the detected object but it is not able to detect whether the obstacle has an extension which length or surface is more than the one which has been detected.

In order to overcome the imprecision which characterized each type of sensor previously described, the aforementioned sensors are combined such that to gain an accurate localization for the mobile robot. In particular, there are well-known mobile robots, which are equipped with a combination of proximity retro-reflecting sensors able to measure the position within the environment of landmarks constituted by reflecting tape positioned on surfaces, in particular on walls at a given height, and couples of ultrasound sensors measuring the distance between the robot and the surfaces each time a landmark is detected. The aforementioned combination of retro-reflecting sensors with sonars allows for a not much precise localization, since the data obtained by the sonars are characterized by a high error degree if, for example, landmarks, other objects or shapes, such as protrusions and corners, are present in the nearby, which can interfere with the ultrasound beams.

Other devices for robot localization and navigation can be made up of metal-sensible sensors which are able to detect landmarks built using rubber sheets with Z shaped aluminum bands located on the ground, or couples of olfactory or thermal sensors able to detect the presence of chemical or thermal landmarks which are located in a given area. The drawbacks of the aforementioned devices lie in the fact that for a proper landmark recognition, the sensor devices must be very close to the aforementioned landmarks, thus limiting to a great extent the robot movement. Furthermore, the identification of the aforementioned landmarks is related to environmental conditions such as lighting or presence of obstacles, walls and objects, which can noticeably limit the accuracy of the measurements obtained through sensing devices.

Other localization methods are well-known, which exploit as landmarks mirrors able to reflect a light beam, otherwise a laser beam, which is emitted by the robot, or landmarks able to reply to the light beam emitted by the robot encoding the angle they have been hit with. Landmarks are positioned in known locations, and in order to compute their position, well-known triangulation or trilateration algorithms are used.

Sensor devices exploiting this type of landmarks are very accurate but, in order to properly work, they require that landmarks are positioned with high precision with a corresponding increased cost of installation and maintenance.

A sensing device according to the present invention has at least one optical scanning device combined with another optical pointing device.

The said combination allows to achieve a device suitable to be used for the localization of a mobile robot which has at least a scanning optical sensor able to overcome in a simple and cheap way the drawbacks affecting known sensor devices commonly used for robot localization.

A profitably embodiment of the sensing device according to the present invention assumes that the aforementioned sensing device is carried out by a robot that is able to move autonomously in an indoor/outdoor environment by associating the local map that the robot builds using the sensing device with a global map of the environment that is stored in the robot's memory:
In order to obtain an accurate measurement of the objects which are encountered during the navigation, the sensing device is characterized by a combination of a rotating pointing laser and a laser rangefinder which measures the position of either natural or artificial features located within the environment.

It is possible to assume that the robot is not provided in its database, which can be either internal or external to the robot itself, with a map of the environment, but to assume that the aforementioned map can be built during robot navigation and continuously updated: in this case the two processes of localization and map building coincide.

The aforementioned sensing device is carried out through a robot part which can be defined as the "head" and contains all the sensing devices allowing the robot to perceive the surrounding environment. According to a preferred embodiment, the aforementioned head with the sensing device that is the subject of this invention, is carried out by a supporting element of a stretched shape, in particular a support axis, linking the robot body that contains all the equipment which is necessary for the robot movements and for transmitting/receiving and/or for processing data obtained from the robot sensory equipment, i.e., from the robot head comprising the sensing device. The head supporting element allows for positioning the sensors to a height optimizing the operations of the two sensors, i.e., the height in which the major number of artificial features are located, which are recognized by the pointing laser, and the majority of objects characterized by a shape that is simpler to measure for a scanning laser.

The robot's body is provided with wheels and actuators for the autonomous navigation, with a processing unit, a memory which can be volatile and/or not volatile that can comprise a database with topological information about the environment, which is connected to a processing unit and/or to the sensing device. Furthermore, devices for transmitting and/or receiving signals for activating and/or deactivating mechanical and/or electronical devices, such as elevators, automated stairs and doors located within the environment, where the robotized vehicle moves, can be present.

The invention has also as subject a method for detecting physical characteristics of a two-dimensional or a three-dimensional environment, and in particular for determining the pose of a mobile robot within its workspace.

According to this invention, the method assumes:
the measurement of the distance and/or the angular position with respect to one or to a number of artificial landmarks.
and the determination of the distance and/or the angular position with respect to natural landmarks.

In particular, the method according to the present invention assumes that the location of one or of a number of artificial landmarks in the environment, which artificial landmarks have a fixed location within the environment, and the determination of objects with a previously defined shape, a previously defined location and previously defined dimensions, which are present within the environment, being generated on the map either of a topographic type or of a database type, where natural landmarks, the objects and the position and/or the dimension and/or the geometric shape are enumerated, whereas the distance and the angular position, and/or the shape and/or the dimensions of the natural landmarks, are detected, being the aforementioned data associated with the map and being determined the original detecting position, i.e., the robot pose through comparisons carried out over the aforementioned map.

Further improvements of the present invention are subject of the dependent claims.

The features of the present invention as well as the benefits derived from them will become more clear from the following description of a number of embodiments which are illustrated in the drawings attachments in which:
The Fig. 1 shows a flow diagram of the method in accordance with the present invention which is based on the pose detection by means of local and remote type devices.
The Figs. 2 and 3 illustrate a pattern which is indicative for operating a vehicle in accordance with the method of figure 1.
The Fig. 4 illustrates a series of movements of a vehicle in a map that uses a method according to figures 1 to 3.
Fig.5 illustrates a series of movements of a vehicle in a map that uses a method according to figures 1 to 3.
Fig. 6 shows a schematic lateral view of the robot's head with an optical scanning sensor and an optical pointing sensor according to a preferred embodiment of the local pose detection device.
Fig. 7 shows a lateral schematic view of the mobile robot according to figure 6.
Fig.8 shows a schematic view of the head with the optical scanning sensor range and the optical pointing sensor range according to the embodiment of figures 6 and 7.
Fig. 9 shows an example of landmarks.
Fig. 10 shows the position which is occupied by the landmarks with respect to the height of a door according to the embodiment of figures 6 to 9.
Fig. 11 shows an example of trajectory followed by the autonomous mobile robot on the basis of the information obtained from the sensing device according to the embodiment of figures 6 to 10.
Figure 12 shows a schematic lateral view of the mobile robot 10, comprising the head 14 with an optical scanning sensor R which is located within the head 14 itself, which is mounted on top of the supporting axis 13, and of a landmark L.
Figure 13 shows a top schematic view of the mobile robot 10, where the head 14 and the supporting axis coincide 13, and of two landmarks: the former is a line features (L1), whereas the latter is a corner feature (L2).
Figure 14 shows a schematic lateral view of the mobile robot 10, with the head 14 mounted on the supporting axis 13, at a height which is very close to the ground floor. Because of the presence of a clutter object O, the optical scanning sensor R in the head 14 is not able to detect the landmark L3 located very close to the floor, since it is occluded by the clutter object O. Even worse, the false detected feature W1 could be wrongly associated to a the feature represented within the map corresponding to the occluded landmark L3, thus making localization unreliable.
Figure 15 shows a top view of the situation depicted in Figure 14.
Figure 16 shows a schematic lateral view of the mobile robot 10, with the head 14 mounted on the supporting axis 13, at a height which is very far with respect to the ground floor. In this case, the presence of the clutter object O does not affect the detection of the landmark L1 which is located very far with respect to the floor. As a consequence, the detected landmark L1 can be correctly associated with the corresponding feature represented within the map, thus aiding mobile robot 10 localization.
Figure 17 shows a top view of the situation depicted in Figure 16
Figure 18 shows a lateral schematic view of the mobile robot 10, where the head 14, mounted on the supporting axis 13, is kept at a height very close with respect to the ground floor, such that an obstacle O hanging down from the ceiling can be avoided.

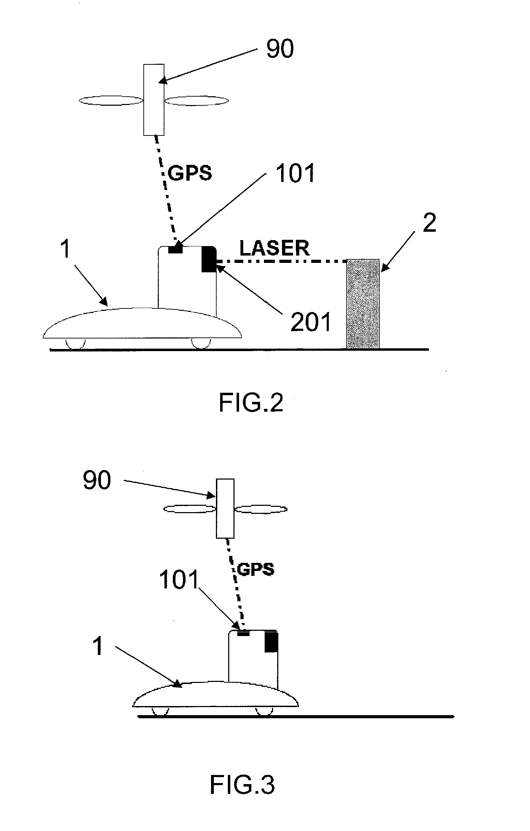

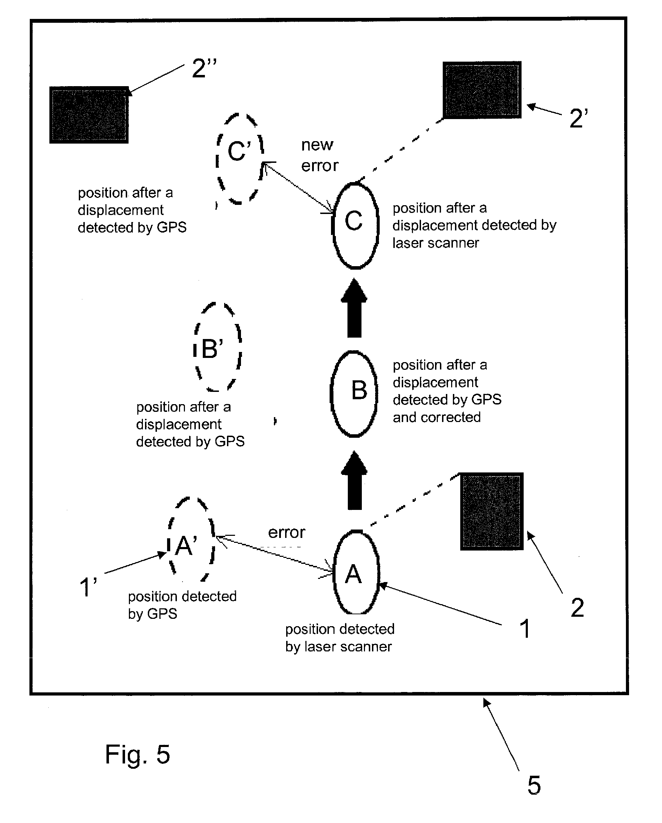

Referring to Fig. 5 it shows a generic map 5, space or area in which a vehicle 1 moves and where there are two objects 2 such as buildings, constructions of any kind, or even geographic embossments of the terrain itself. The vehicle, according to the present invention or using a method in accordance with the present invention, is provided with a device for pose detection of a remote type 101, such as a detector that uses a satellite system 90, such as a GPS or similar, roughly depicted in Figs. 2 and 3; furthermore, the vehicle is also equipped with a device for pose detection of a local type 201, such as an optical, otherwise acoustical device or similar, such as a laser rangefinder as a preferred solution.

The remote device can be a device such as a phone system, e.g., GSM or similar. It is well-known that a GSM receiver or similar can, if properly calibrated, detect the location of the receiver, thus implementing an executive example of a type of remote alternative to the satellite-based system.

In particular, the definition of a local device associated with the vehicle defines the pose determination through reference fixed points for distance and heading measurements of those points from the vehicle, and the position determination by tracking and/or associating such distances and/or angles data with a known map, including those reference fixed points. In the case of a local device, fixed reference points are set in, that is within the local environment, such as a building, a room, or similar.

The local positioning device provides the determination of the vehicle pose on the basis of data measuring distances and heading towards local reference points, such as distances and/or detection angles of landmarks and/or known object's shapes and/or known object's dimensions which are provided to the vehicle by a known local map, and by mapping distance and heading measurements on that map. An operation of this type is known in the sailing field, for example, as triangulation.

The objects 2 have a position, otherwiser a location, which is precise and known in terms of their geographical coordinates, and all the data related to these objects are preferably stored in a database where for each profile and for each object or item the corresponding geographical coordinates are associated.

For example, referring to Fig. 5, the geographical coordinates of objects 2, 2' and 2" are precisely known. Still referring to Figure. 5, it can be noticed that the vehicle 1 in a first position A is able to detect through the pose detection device of a remote type a position A', which is defined by geographical coordinates corresponding to the position A', that is different from the actual position or location A, defined by the geographic coordinates corresponding to A, and this is because of the inherent error in the GPS system, which order of magnitude is approximately 10 meters.

The vehicle 1 notices also its real position A, that is defined by geographical coordinates corresponding to position A, through the pose detection device of a local type, for example the laser rangefinder, which recognizes the profile of object 2, associates such a profile with the known geographical coordinates of object 2 itself, and then computes the exact geographical coordinates of position A the vehicle is located in, depending on the distance and heading with respect to the known object 2.

It is possible to think that the computation of the coordinates corresponding to the position A of the vehicle with respect to the objects using the laser rangefinder is done through the recognition of one, two, three or more objects, through known interpolation techniques, or similar topographical triangulation techniques.

Therefore, the vehicle has two geographical coordinates: those indicated by the GPS or similar, and corresponding to the position A', and those, which are more precise, obtained by the laser rangefinder with respect to objects with known coordinates. There is therefore an error, which may be assessed, for example through subtraction or computational algorithms, e.g., the KALMAN filter or KALMAN method, in order to obtain a series or a pose correction measurements.

When the vehicle moves, for instance in position B of Figure 5, where there is not in sight view, i.e., detectable by the laser rangefinder, any object that can be used as described above, the vehicle or the device detects the geographical coordinates from the GPS system, which, being affected by an error, identifies a position B'. The vehicle, through the method in accordance with the present invention, computes the coordinates corresponding to the position B through the application of statistical methods and/or algorithms, such as the KALMAN filter, or Bayesian or similar methods. The application of these statistical methods and/or algorithms, such as the KALMAN filter, or Bayesian methods or similar, to geographical coordinates corresponding to the position B' and detected by GPS, provides an extremely accurate estimate of the geographic coordinates corresponding to the true position B occupied by the vehicle.

This way, it is possible to correct the GPS estimation, which is affected by an error with order of magnitude from ten to fifty meters, and to reduce the order of magnitude even to a few centimeters or millimeters, without having to provide further information.

The advantage over the state-of-the-art method of differential GPS is important: whereas in differential GPS each measurement should be detected and corrected by a comparison between the geographical coordinates of the mobile device and the base station, in this case not only there is no need of a base station and of a continuous radio link with the station itself, but also the vehicle continues to correct the geographical coordinates although new objects 2 are not encountered, through the above aforementioned statistical methods and/or algorithms, such as the KALMAN filter, otherwise Bayesian or similar methods.

When the vehicle, after one or more additional moves, encounters a new known object 2' that is detected by the laser rangefinder or similar device, it will repeat the steps above. In general, it corrects at least one pose as provided by at least one remote device through a comparison with at least a given pose provided by at least one local device associated with the vehicle.

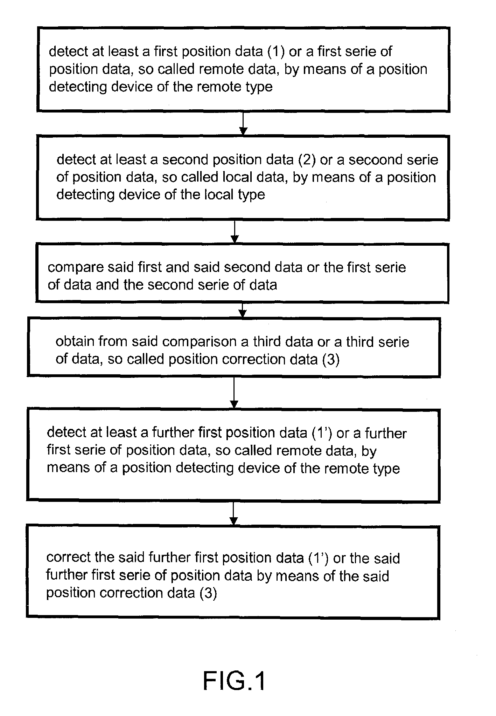

In a preferred embodiment, shown for clarity in Fig. 1 as a flowchart, a method according to the present invention includes the following steps:
To detect at least a first measurement or a given initial series of pose data, called remote data, using a pose detection device of a remote type.
To detect at least a second measurement or a given second series of pose data, called local data, using a pose detection device of a local type.
To compare the aforementioned first and second measurements or the first and the second data set.
To compute from that comparison a third measurement or a third set of data, called correction pose data.
To observe at least one additional first measurement or a given further series of pose data of the first type, called remote data, using a pose detection device of a remote type.
To correct the first additional measurement data or the additional series of pose data of the first type through the correction pose data.

It should be noticed that at least a first measurement or the first series of pose measurements, called remote data, and the second measurement or the second series of measurements, called local data, are geographical coordinates, but they can be also data of a different type, for example in a format which is proprietary of a software that is installed on board of the vehicle or other data types useful for localization or vehicle positioning.

In a preferred embodiment the first measurement or the first series of measurements, so-called remote data, are detected through a satellite-based system, or GPS (Global Positioning System), or similar, through a remote detection device such as a receiver and/or GPS system, as depicted in Fig. 2 and 3, whereas the second measurement or the second series of measurements are detected through a local device such as an optical, otherwise acoustical device, or similar.

In particular, it is possible that, alternatively to the previously described preferred embodiment, which assumes the use of a laser rangefinder, similar local devices could be used as well, such as a pointing laser, an infrared sensor, or similar.

In case of pointing lasers, proper transponders can be used as known objects, which are devices which, when hit by the laser, send a radio, otherwise optical or acoustical signal, or similar, such that they can be recognized by the local device on board of the vehicle. In particular, it is possible to assume the availability of transponders which, when hit by the laser, are able to send to the vehicle positioning data, otherwise the precise geographical coordinates of the transponder itself, thus avoiding the presence of the database on board of the vehicle. As a matter of fact, the local device receives as input directly one or a series of geographical coordinates, those of the hit transponder. Therefore, the vehicle or a computing device, or similar, computes the local geographical coordinate using these measurements and repeats the previously described steps of this method.

In a preferred embodiment, the optical device is a device able to detect ranges, angles or similar quantities, and specifically is a so-caller laser rangefinder, i.e., a device which comprises a laser rotating of a preferred angle which is preferably located on a horizontal plane, and a receiver able to receive the laser reflection, when it hits the surface of an object, thus allowing to recognize the shape of known objects, which are associated or which can be associated to known geographical coordinates, and preferably stored in a database, which is stored on board the vehicle, and it is used as a map for pose estimation through the local device, once the steps related to object recognition, distances and/or angles determination are performed.

The association between the objects' shape or objects' profile and the geographical coordinates is preferably realized through a database or map of objects with known geographical coordinates, which database is assumed to be present on board of the vehicle.

In a preferred embodiment, the method of the detection of a vehicle pose comprises the following steps:
A. to detect the vehicle pose as remote geographical coordinates provided by a device of remote type, preferably a satellite-based device such as GPS or similar
B. to detect the presence of at least one object with known geographical coordinates
C. to detect the vehicle pose as local geographical coordinates by comparing the distance and/or the heading with respect to known geographical coordinates of the object itself
D. to compare the geographical coordinates of a remote type with the local geographical coordinates, thus obtaining a pose correction factor or correction measurement which refers to the difference between the remote and the local geographical coordinates
E. to perform at least a vehicle movement
F. to detect the new vehicle pose as geographical coordinates of a remote type that is provided by the so-called remote device, preferably a satellite-based device such as GPS or similar
G. to apply the correction factor or the pose correction measurement to the new geographical coordinates related to the new vehicle pose, thus obtaining the new corrected geographical coordinates.

Furthermore, the method account for the possibility of repeating the previously mentioned steps E, F, G and of repeating the previously mentioned steps from A to D.

The computation or the retrieval of the aforementioned correction factor or pose correction measurement through comparing remote measurements or remote coordinates with local measurements or local coordinates, and the computation or the retrieval of new corrected geographical coordinates by comparing remote measurements or remote coordinates and the aforementioned correction factor or pose correction measurement, are carried out using either statistical or mathematical algorithms, and in a preferred solution this mathematical or statistical method is a KALMAN algorithm or a KALMAN filter, otherwise another Bayesian estimation technique or similar.

Alternatively, the optical or acoustical device, or similar, is a rotating laser, and the aforementioned object is a so-called transponder; the rotating laser hits the transponder, which on its turn sends to the vehicle one or a number of data, in particular the geographical coordinates of the transponder itself.

On the other hand, the objects 2 which can be detected by the laser rangefinder consist in at least one or a part of a building, of a construction, or similar, profitably relaxing the assumption regards the availability of transponders.

In general, the vehicle realizing the method according to this invention is at least equipped with
a pose detecting device of a remote type
a pose detecting device of a local type
a computational device.

Furthermore, specifically in case that the pose detection device is a laser rangefinder, the vehicle comprises also a database containing information about geographical coordinates of either known objects or known objects' profile which are connected to the computational device and/or to the pose detection device of a local type.

The pose detection device of a remote type is preferably but not limited to a satellite-based system, such as GPS or similar.

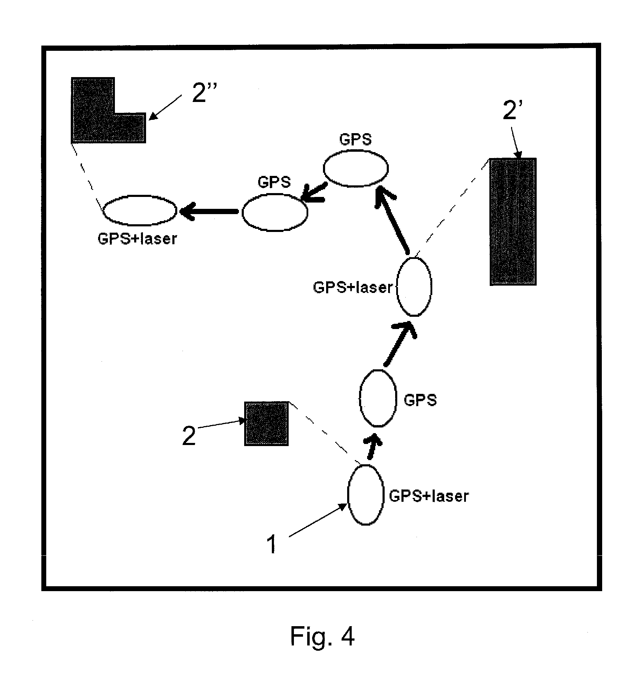

In Fig.4 the navigation of a robot realizing the method according to the present invention for the autonomous drive in a physical environment is roughly sketched. At the beginning, the robot 1 determines the pose through the use of the GPS and the laser rangefinder, exploiting the object 2 which position is known by the robot and stored in the database hosted on the robot itself. Next, after a move which is sketched using a black arrow in Fig.4 the robot uses only the GPS coordinates which are corrected with the method according to the present invention in order to determine its pose and to aid itself during navigation, until the object 2' is encountered. When the robot encounters object 2', the object 2' itself is detected by the laser rangefinder and the robot pose is estimated with respect to known coordinates of object 2', thus computing a new correction coefficient or pose correction measurement for the subsequent navigation. Therefore, the robot continues the navigation process using just measurements provided by the remote system, i.e., the GPS, until the local pose device, the laser rangefinder, is able to identify object 2", etc. This way, the robot is able to perform autonomous navigation, i.e., which is not supervised by humans, determining its pose with respect to geographical coordinates with high precision.

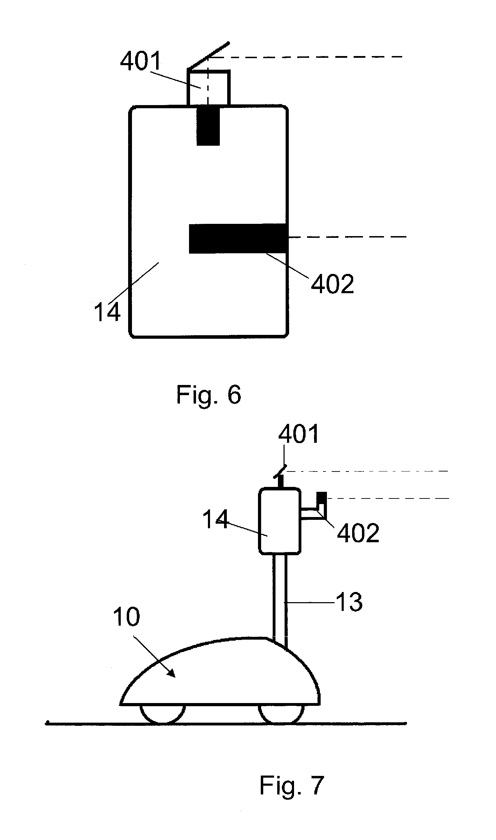

Figure 7 shows a lateral schematic view of a robot 10 according to the present invention, which is able to autonomously navigate within a given environment.

Referring to the preferred embodiment of the local means for detecting the pose of a vehicle or robot, in order to allow a simultaneous localization and mapping process of a mobile robot 10, the aforementioned robot 10 must be able to recognize environmental features. The aforementioned features, henceforth referred to as landmarks, can be divided into natural landmarks, i.e., preexisting segments, corners and objects in the environments, and artificial landmarks 12, i.e., objects purposively designed and realized to be recognized by the sensory system of a robot 10. The artificial landmarks 12 can be built from reflecting or reflecting back, metallic or metallized surfaces, infrared devices, radio emitters or similar.

In order to move, robot 10 is provided with at least two wheels, preferably four, which are connected to at least an engine. Furthermore, encoders which are linked to the wheels' axes or to the engine fixture can be assumed to be available, in order to measure the rotation speed of the wheels and/or the steering wheel orientation. In order to avoid either expected or not, either static or moving obstacles, the aforementioned robot 10 is provided with a sensing device to detect physical features of a two-dimensional or three-dimensional environment, in particular artificial or natural landmarks 12.

Odometric measurements which are obtained through the encoders can be combined with absolute measurements referring to the pose, which are obtained through the sensing device, which is subject to this invention such that it possible to determine with major accuracy the robot 10 pose within the environment, to reduce the landmark search space and to locate landmarks reasonably distant from each other.

Referring to Figure 6, the sensing device which is subject to this invention is made up of an optical scanning sensor 402, combined with a further optical pointing sensor 401.

In particular, the optical pointing sensor 401 is a pointing laser which is commonly used for the automatic guidance of autonomous mobile robots 10. The laser 401 sends a collimate beam rotating on a horizontal plane and/or on a plane that is parallel to the surface over which the robot moves, for an angle ranging from 0 to 360 degrees, with a proper frequency. The heading of the laser beam is operated using a small mirror rotating around another vertical axis, whereas the laser rotating plane, which coincides with the plane over which the artificial landmarks 12 are placed, is horizontal and positioned at difference heights according to the actual needs.

The use of lighting energy, and in particular the use of the laser, allows for the use of higher frequencies for data updating, in particular in an order of magnitude between 0.5 and 20 Hz. Furthermore, it is possible to have a precise beam heading due to the intrinsic properties of lasers. The laser beam 401 hits a distinctive feature within the environment, an artefact or an artificial landmark 12, that can be made up of a reflecting surface or a transponder, and it is the heading and/or the distance with respect to which the target is detected which are measured. On the basis of a known map, where the position of the various artificial landmarks 12 are assumed to be known, it is possible to reconstruct, both when standing still and when moving, an estimation of the robot 10 pose.

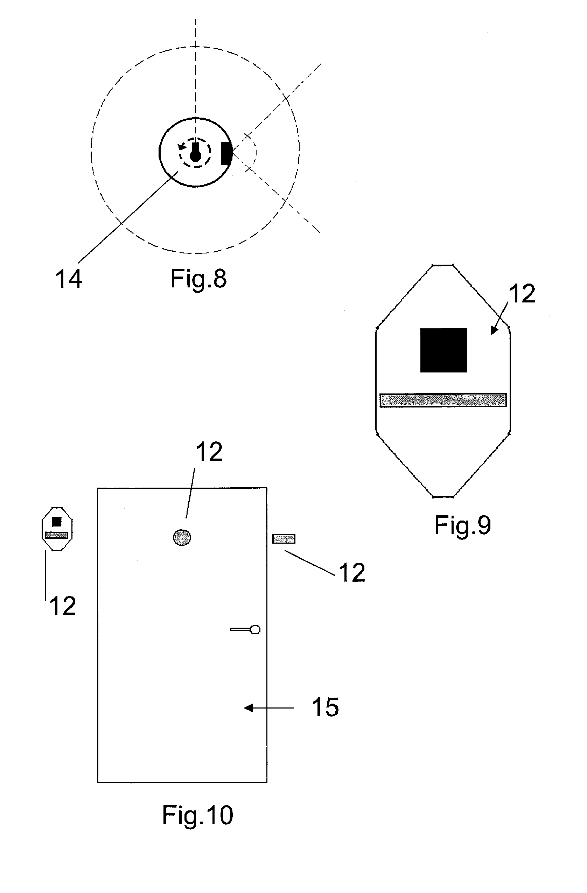

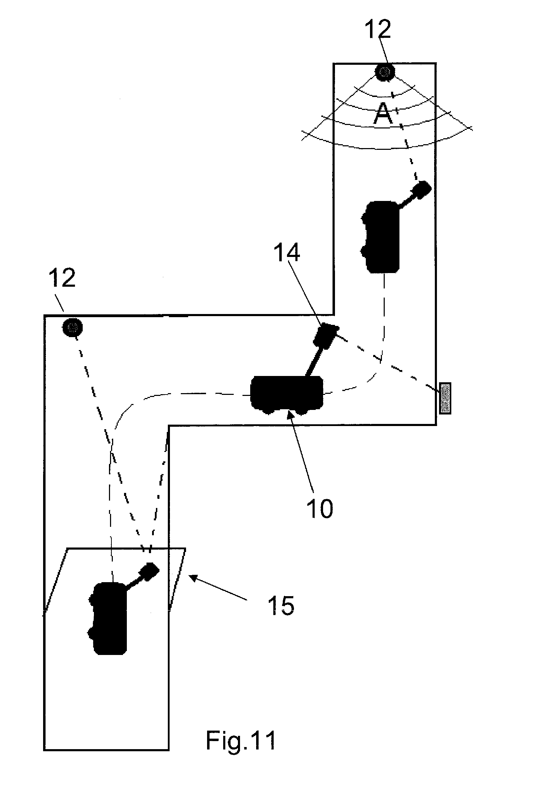

As depicted in Figures 9 and 10, the aforementioned artificial landmarks 12 are designed to exhibit a high contrast with respect to the background and to be characterized by a shape which is precisely known. Widely used landmarks are characterized by geometric rectangle-like shape, circle-like shape, and rhombus-like shape, and/or made up of reflecting tape bands. They can also contain additional information such as bar codes. As it is illustrated in Figure 11, it is possible to assume the availability of active landmarks which are able to "answer" when hit by the laser beam. In this case, the availability of a number of active landmarks throughout the environment and an optical pointing laser 401, that is located over the robot 10 such that it can rotate around a vertical axis, emitting a light beam that is modulated, and provided with an infrared receiver able to receive the answers of the active landmarks, is assumed. Both the optical pointing sensors 401 and the active landmarks are endowed with elements which are aimed at receiving and transmitting information. This system allows not only to identify landmarks throughout the environment, but it provides also information on the type of landmark that has been identified such that the robot localization within the environment can be more precise, and to allow, for instance, when specific landmarks are detected, the automatic activation of robot functionalities. In an executive example, it is possible to account for the positioning of active landmarks in the nearby of elevators such that whenever robot 10 detects the presence of the aforementioned active landmarks, it can activate a behavior for asking the presence of the elevator at the floor.

In another embodiment of the sensing device which is subject of this invention, also the distance of the artifact or of the artificial landmark 12 is measured.

In particular, it is possible to assume the availability of one or of a number of artificial landmarks 12 such as reflecting surfaces and/or transponders located in the environment where the robot 10 must navigate into. In particular, the aforementioned artificial landmarks 12 must be located in known positions and, in order to compute the robot 10 pose, algorithms based on triangulation or trilateration must be used. On the other hand, it is possible to account for at least one reflecting surface and/or a transponder on the robot 10, and at least an optical pointing sensor in the environment where the aforementioned robot 10 operates into.

On the basis of the estimation of the distance of the aforementioned landmarks 12, the robot 10 knows its position on the circumference which radius is given by the distance between robot 10 and landmark 12. In order to determine the pose at least three references or landmarks 12 are required, from the intersection of which circumferences an unique point identifying the robot 10 pose in the environment (determination of the robot pose through triangulation) can be determined. Alternatively and/or in combination with the distance measurement of robot 10 with respect to landmark 12, it is possible to evaluate the heading at which each landmark 12 is detected with respect to the robot.

It is possible to reduce the number of artificial landmarks 12, otherwise the number of the reflecting surfaces or transponders and to infer the robot pose in case the artificial landmarks 12 lie on the same line and it is not possible, as a consequence, to compute their heading direction with respect to robot 10, thus using another sensor exploiting other references to allow robot 10 localization.

The sensing device that is subject of this invention presents as well an optical scanning sensor, a so-called laser rangefinder 402. The aforementioned sensor 402 can be used in different ways, usually always with the scanning plane lying on the horizontal plane and/or parallel to the ground, and at different heights, according to the objects which have to be detected. Often, it can be used also to detect situations of potential crashes against obstacles, and therefore it is located just above the ground or at the center of the main robot 10 body.

In the laser rangefinder, a collimate beam rotates on a plane according to an angle comprised between 90 and 270 degrees, in particular with an angle of 180 degrees. The aforementioned radius, hitting the surfaces of objects which are present within the environment and located within a range that is comprised, for example, between 10 cm and 50 meters, is able to measure the distance using interferometer-based, otherwise convolution-based techniques, or similar, and/or the positioning heading of the robot 10 with respect to the object. Through the aforementioned scanning sensor 402, two measurements for each visual degree are taken, and the angle between the two consecutive measurements is computed. All the angles belonging to the same part of the wall, segment or obstacle are characterized by similar values and viceversa. The scanning frequency imposes the speed for acquiring new data, and it can range from few Hz to dozens of Hz. The measurement precision of the aforementioned laser rangefinder 402 is in the order of magnitude of centimeters, in particular, it less that 1 cm or slightly more, whereas the angular resolution ranges between tenth degrees and a few degrees. On the basis of these measurements and of a known map including the profiles of known objects in sight, it is possible to reconstruct the relative position of the robot 10 with respect to them also in case the artificial landmarks 12, in particular the surfaces and/or the transponders, are characterized by a limited transmission ability that is not enough to overcome long distances or in case they can not be easily detected by the optical pointing device 401 on board the robot.

In order to obtain these advantages and to reduce approximation measurement errors which are caused by the limited precision of each sensor that is used for building maps useful for localization, and therefore useful for the operation of a mobile robot 10 in a given environment, in this embodiment the aforementioned optical pointing sensor 401 and the aforementioned optical scanning sensors are to be placed either close with respect to each other or very close with respect to each other.

In particular, the two different sensors 401 and 402 are operatively associated such that they can operate on two horizontal planes with a small distance with respect to each other.

The aforementioned optical pointing sensor 401 and the aforementioned optical scanning sensor 402 are mutually adjacent at a distance, either vertical or horizontal, which ranges between 0 and 50 centimeters. In a preferred embodiment that is depicted in Figure 6, the two optical sensors are placed at different heights with respect to each other, and at distance of few centimeters, i.e., at the minimum distance that is allowed by the sensors themselves such that the horizontal planes in which the laser beams propagate and/or scan, as depicted in Figure 8, are almost coincident or with a few centimeters distance, and such that the artifacts or landmarks 12 which are detected by the rotating pointing laser sensor 401 are at the same elevation from the ground with respect to objects detected by the laser rangefinder 402.

In order to avoid interferences both from the physical and the mechanical perspective between the two sensors 401 and 402, the pointing laser 401 is positioned above the aforementioned scanning laser 402, such that the laser beam of the sensor 401 is free to rotate for 360 degrees without interferences with the laser rangefinder 402 beam which vertical opening, that is obtained using a cylindrical lens, can be of about 10 degrees.

Measurements originating from the two devices can be combined from the mathematical point of view in different ways in order to obtain a good robot localization, which is functional to its autonomous navigation.

With a "proper mathematical model" a whatsoever mathematical or statistical model is referred to, otherwise computational algorithm, for example in a referred embodiment the KALMAN model or KALMAN filter is profitably used. The KALMAN filter is a well-known algorithm that is used to filter measurements on the basis of a reasoned and a proper mean between the next predicted values and the next estimated value. This filter is often used to obtain a better estimation of a quantity that is obtained from the readings of several sensors, each one characterized by a measurement noise with different and time-varying characteristics (and therefore in the frequency domain as well). Further information about the KALMAN filter or KALMAN model can be retrieved in the scientific literature, in particular in "An introduction to the Kalman filter" (Department of Computer Science University of North Carolina at Chapel Hill TR 95-041), otherwise in the on-line encyclopedia WIKIPEDIA (www.wikipedia.org).

Alternatively or in combination, it is possible to use Bayesian methods, which scientific description can be retrieved from the on-line encyclopedia WIKIPEDIA (www.wikipedia.org), or in scientific textbooks, and/or different statistical techniques, such as methods for computing the error and/or methods for perturbation calculus which are commonly used in both mathematical and physical fields. Another characteristics of this embodiment assume that the sensing device is located in that part of the robot 10 which is usually called head 14 and which carries the sensors and/or the devices for transmitting and/or devices for receiving information to/from the environment, such that to actively contribute to the robot navigation and to its interaction with objects located in the environment.

It is possible to assume that the origin of the two laser beams is located on the same vertical line passing through the head 14 of the robot 1, i.e., both the sensors are comprised within the head 14 structure of robot 10, otherwise that one of the two lasers, in particular, the laser rangefinder 402, is located under the rotating laser 401, but in a position which slightly protrudes with respect to the head 14 such that to avoid reflection effects which occurs whenever a sensor perceive either the input or the output signal of another sensor with the consequent generation of errors, such as the detection of a landmark that is not present within the environment, or, viceversa, a no detection measurement for a reference.

The head 14 with the sensors is carried out by a structural supporting element which is linked either in a fixed or in a movable way to the body of the robot 1. The structural support 13 could allow the head 14 to rotate with respect to the aforementioned body.

In particular, the structural supporting element is made up of a pole which height is either fixed or variable, which allows to position the head 14 along with the corresponding sensors 401 e 402 at the desired height with respect to the navigation plane or surface, and support for the robot 10, i.e., at the height that is considered most suitable to avoid the interaction of the laser beams with respect to fixed or moving, living and/or non-living obstacles which are present within the environment. As a matter of fact, it is important to avoid that the action planes of the two lasers 401 and 402 act within an area close to the ground where objects which could interfere with the measurements are mostly located. It is possible to notice that, in human inhabited environments, where the presence of the aforementioned robot 10 can be necessary, the concentration of objects which are useful to the fulfillment of a whatsoever task is at its maximum in the range that is comprised between the ground and the mean height of a human being, and the aforementioned concentration diminishes as long as height increases, thus leaving the ranges which can be reached by a human being of a mean height without the use of devices, such that stairs, chairs, or similar.

In order to allow the use of autonomous mobile robots in environments which are characterized by the presence of ceilings, doors 15 or similar, it is possible to assume that the height of the structural supporting axis is such to allow for the passage of the robot 10 with the head provided with sensors through doors, passages, obstacles which are hanged down in the environment, or similar. Therefore, the action planes of the two lasers, due to the structural supporting axis 13, are placed almost at a 2 meters from the ground, and the artificial and natural landmarks which are detected by the laser beam are located at a corresponding height. As depicted in Figure 10, the mean height of doors which are present in the environment where the robot 10 navigates, of artificial landmarks 12 and/or of reference features which are detected by the laser range finder 402, are located near the door upper edge, at the two sides of the door or directly above the door itself, but always close to the upper half such that the complete height of the robot 1, that comprises the structural supporting axis 13 and the head 14 is able to pass under the upper limit of the doors or of other obstacles, thus avoiding interference and redundancy problems which could arise by realizing a robot that is provided with highly sensible and precise sensors such as lasers, but operated at a height that is cluttered because of various obstacles.

In the produced device the height at which to apply the head 14 with the sensing device to the robot is in a range between 170 and 210 cm from the ground, or between 180 and 200 cm considering the mean height of doors within buildings, which are measured on the horizontal plane of the rotating laser. Outside these heights, the sensing device is seldom effective for use in civilian environments both outdoor and indoor.

Obviously enough, the height of the structural supporting axis 13 of the head 14 and the corresponding height of the laser action planes 401 and 402 can be modified according to the doors height or to other obstacles which are hanged down throughout the environment where the robot 10 operates, and the corresponding landmarks can be positioned and/or consequently chosen.

The arrangement of such a bimodal head is compulsorily at a height such that to optimize the operations, with partially contrasting requirements with respect to the two sensors 401 and 402. As a matter of fact, the rotating laser 401 requires the minimal interposition of objects which can occlude the reflecting artifacts or the transponders. The laser rangefinder 402 requires a given quantity of objects characterized by a simple shape to be measured, otherwise known fixed parts such as walls, signs, edges, and a small number of objects which do not disturb. Depending on the applications and on the environments where the robot must operate, the height of the device neither cannot exceed values such that the movement of the robot itself is compromised, for example, in order to navigate through doors, nor such that to disturb surrounding people.

A further embodiment assumes the availability of a structural supporting axis 13 that is bendy, such that the robot passage can occur also under obstacles of different heights. It is possible to configure the robot in a way that in case of the presence of specific active landmarks, which are aimed at signaling to the robot the presence of an obstacle at a given height, the robot 10 can autonomously vary the head 14 height in order to avoid the obstacle and to autonomously position the head back to the previous height, once the obstacle has been avoided.

In Figure 11, the movement of a robot using a sensing device according to the present invention for the autonomous navigation in an outdoor, or indoor, otherwise during the passage from an outdoor environment to an indoor one, and viceversa, is roughly sketched. The mobile robot 10 determines its own position through the rotating laser 401 that is able to identify the first artifact or artificial landmark 12 that is present along its path and which position is known and stored within the database or the map, which the robot is provided with, through a memory. In combination or after the gathering of this measurement, the laser rangefinder 402 detects a known and fixed object with simple shape, that in the example is represented by a corner, that is stored within a map or within a database of objects characterized by known shape and dimensions, stored in the robot's memory. The detection of landmark 12 allows the robot to reduce the reference search space for the laser rangefinder 402 and to proceed for the pose computation. By combining the measurements gathered by the sensors the robot 10 navigates within the environment using both artificial and natural landmarks. As depicted in Figure 11, it is possible to assume that within the robot workspace active landmarks, able to actively or passively provide the robot with information, i.e., to communicate with the robot, are present, for instance through a particular shape or material they are designed with, that is recognized by the robot itself. For example, the aforementioned active landmarks can be located near elevator's doors or automated doors such that robot 10 is able to autonomously activate their opening or closing whenever it recognize to be close those active landmarks.

Since the accuracy in recognizing the pose through a laser depends on both the distance and the heading the reference is hit with, i.e., the accuracy is maximum when the sensor is close to the reference, the possibility of combining two laser sensors which, per sè, are very precise, and of positioning them very close with respect to each other, such that they can sense the same horizontal place, i.e., such that they can gather information concerning the same area, allows to improve the localization accuracy also in case robot 10 is at a certain distance from the artifact, since it can correct the information by combining data obtained with the pointing laser 401 with the data obtained with the laser scanner 402. Furthermore, the combination of two sensors allows to maximize the localization accuracy reducing the number of artificial landmarks, and therefore reducing installation and maintenance costs as well.

The invention has also as subject a method for detecting the physical features of a two-dimensional and/or three-dimensional environment, and in particular for determining the pose of a mobile robot 1 within the environment it operates in. Therefore, the method allows the localization of a robot 1 moving autonomously within an indoor or outdoor environment.

The method allows the measurement of the distance and/or of the angular position with respect to one or to a number of artificial landmarks 2, and the determination of the distance and/or the angular position with respect to natural landmarks.

According to the method that is described in this invention, one or more landmarks are positioned throughout an environment with a fixed location: natural landmarks are detected through an optical scanning device, for example the so-called laser rangefinder 402, whereas the artificial landmarks are detected through an optical pointing device, for example a laser 401. As it has been previously described, the aforementioned optical scanning device 402 and the aforementioned optical pointing device 401 are adjacent or immediately adjacent with respect to each other, such that they can operate on two planes which in practice coincide or which are slightly displaced.

According to this method, the action plane of the scanning sensor 402 is in practice coincident with the plane over which at least a natural landmark that is present within the environment, and recognized by the aforementioned scanning laser 402, is located. The optical pointing sensor 401 is located over the optical scanning sensor, anyway such that it can freely rotate of 360 degrees, and its action plane coincides in practice with the plane over which at least an artificial landmark is located.

In an embodiment, the artificial landmarks are provided with transmitting devices, able to transmit additional information, and are activated from the detecting sensors of the so-called artificial landmarks, whereas the aforementioned sensors 401 and 402 are provided with devices able to receive the aforementioned information. The active artificial landmarks are able to receive and to transmit information and commands from and to transmitting/receiving devices which are associated to the sensors 401 and 402 for detecting the aforementioned artificial landmarks 12.

Furthermore, the method assumes the determination of objects which are characterized by a given shape, a given position and given dimensions, objects which are present in the aforementioned environment, a topographic as well as a database-like map being generated, where all the natural landmarks, the objects and the positioning data, and/or the dimension and/or the geometric shapes are enumerated, while the distance and the angular position with respect to the artificial landmarks, and the relative angular positions, and/or the shapes, and/or the dimensions of natural landmarks are detected, being these data mapped and being determined the original detecting position, i.e., the robot pose through a comparison with the aforementioned map.

As already disclosed above the optical scanning device or the entire head 14 is placed on top of a support 13 able to extend along the vertical direction, with respect to the floor, in particular for the geographical localization of a mobile robot. The scanning device or the entire head 14 operates on a two-dimensional plane, and suffers for the presence of clutter objects and other similar obstacles which occlude features and landmarks in the workspace, thus making feature detection and association more difficult.

When using landmarks as disclosed in the previous example, the drawbacks of the aforementioned devices lie in the fact that for a proper landmark recognition, the sensor devices must be very close to the aforementioned landmarks, thus limiting to a great extent the robot movement. Furthermore, the identification of the aforementioned landmarks is related to environmental conditions such as lighting or presence of obstacles, walls and objects, which can noticeably limit the accuracy of the measurements obtained through sensing devices.

Sensor devices exploiting this type of landmarks are very accurate but, in order to properly work, they require that landmarks are positioned with high precision with a corresponding increased cost of installation and maintenance. Furthermore, although data association can be considered solved, since each landmark is univoquely labeled, clutter objects are still an issue.

According to the present embodiment, the sensing device or the head has at least an optical scanning device combined with a support able to move the optical scanning device along the vertical direction with respect to the ground floor and a given reference frame.

Thus a mobile robot which has a scanning optical sensor mounted on top of a support able to translate along the vertical axis, able to overcome in a simple and cheap way the drawbacks affecting known sensor devices commonly used for mobile robot localization.

A profitably executive form of the sensing device, according to the present invention, assumes that the aforementioned sensing device is carried out by a robot that is able to autonomously navigate within an indoor/outdoor workspace by associating the local map periodically built by the mobile robot using the sensing device with a global map of the environment that is stored in the robot's memory. The aforementioned sensing device is placed on top of a support, which is mounted on the mobile robot and therefore its position is fixed with respect to a robot-centered reference frame, that is able to translate the sensing device along the vertical axis, thus being able to find the most promising two-dimensional scanning plane where the aforementioned feature association is easier.

In order to obtain an accurate measurement of the objects which are encountered during the navigation, the sensing device can be realized by a laser rangefinder which measures the position of either natural or artificial features located within the environment. Furthermore, in order to keep the probability of wrong feature association at the minimum, which is possible for the presence of clutter objects and similar obstacles within the environment, the sensing device is composed also by a support for the laser rangefinder which is able to locate the aforementioned laser rangefinders at different heights from the floor, and that is realized by a motorized pole which is mounted on the mobile robot, and therefore its position within the workspace is constant with respect to a robot centered reference frame.

It is possible to assume that the robot is not provided in its database, which can be either internal or external to the robot itself, with a map of the environment, but to assume that the aforementioned map can be built during robot navigation and it is continuously updated: in this case the two processes of localization and map building coincide. Furthermore, it is possible to assume that the map is constituted either by a full three-dimensional map of the whole workspace; alternatively, it is composed by a selected subset of a full three-dimensional map, where different heights (possibly one, therefore considering a two-dimensional map) have been selected as representatives of the full three-dimensional workspace.

The aforementioned sensing device is carried out through a robot part which can be defined as the "head" and contains all the sensing devices thus allowing the robot to perceive the surrounding environment. Furthermore, the aforementioned head with the sensing device that is the subject of this invention, is carried out by a supporting element of a stretched shape, in particular a support axis, linking the robot body that contains all the equipment which is necessary for the robot movements and for transmitting/receiving and/or for processing data obtained from the robot sensory equipment, i.e., from the robot head comprising the sensing device. This supporting element can place the head at various heights along the vertical axis, the latter coinciding with the main axis of the supporting element itself, in order to minimize the probability of making wrong feature associations. As a consequence, the head allows for positioning the scanning sensors to a variable height which dynamically optimizes the operations of the laser rangefinder, i.e., the height at which, depending on the current mobile robot pose in the workspace, on the mutual position between the robot and surrounding clutter objects and similar obstacles, and on the position of the features to be detected within the environment, the major number of features are located, which are characterized by a shape that is simpler to measure for a scanning laser.

Also in this embodiment, The robot's body is provided with wheels and actuators for the autonomous navigation, with a processing unit, a memory, which can be volatile and/or not volatile, that can comprise a database with topological information about the environment, that is connected to a processing unit and/or to the sensing device. Furthermore, devices for transmitting and/or receiving signals for activating and/or deactivating and/or operating mechanical and/or electronic devices, such as the head supporting axis which is able to translate the head at different heights with respect to the floor, can be present.

A method for detecting physical characteristics of a two-dimensional or a three-dimensional environment, and in particular for determining the most promising scanning plane suitable for the scanning device, otherwise the most promising height at which to translate the aforementioned head in order to minimize the probability of wrong feature association and therefore allowing for a reliable pose determination of a mobile robot within its workspace, comprising the following steps:
1) The measurement of the distance and/or the angular position with respect to one or to a number of either natural or artificial landmarks. 2) The measurement of the complexity of the environment surrounding the mobile robot in its workspace.

In particular, the method according to the present invention assumes that the location of one or of a number of either natural or artificial landmarks in the environment, which natural or artificial landmarks have a fixed location within the environment, and a previously defined shape, a previously defined location and a previously defined dimensions, which are present within the environment, being generated during a training phase on a map either of a topographic type or of a database type, where landmarks, their position and/or their dimension and/or their geometric shape are enumerated, whereas the distance and the angular position, and/or the shape and/or the dimensions of the detected landmarks, being the latter landmarks associated with the map through a feature association process, and being therefore univoquely determined their position at the time of detection, then the robot pose is determined through comparisons carried out between features currently detected and present in the aforementioned map.

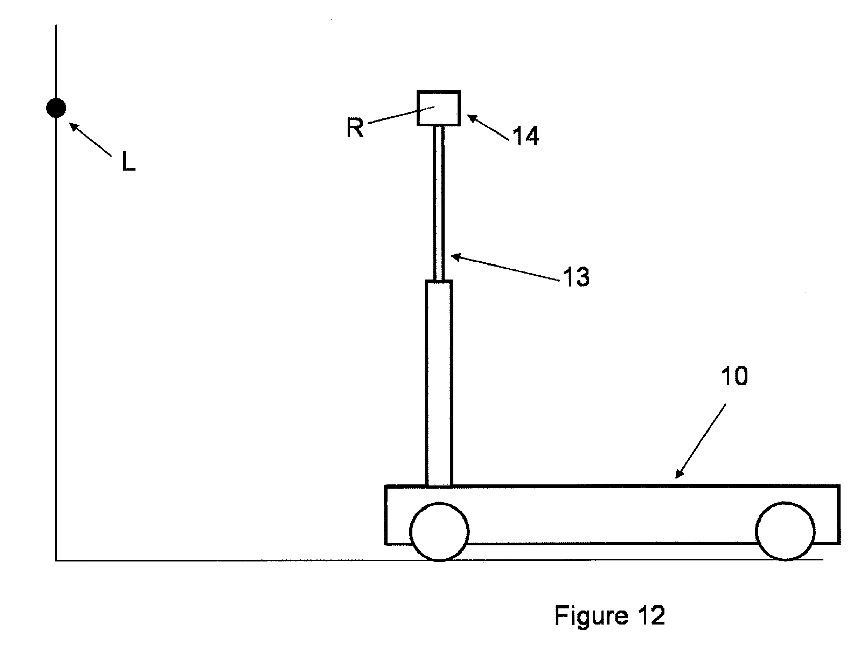

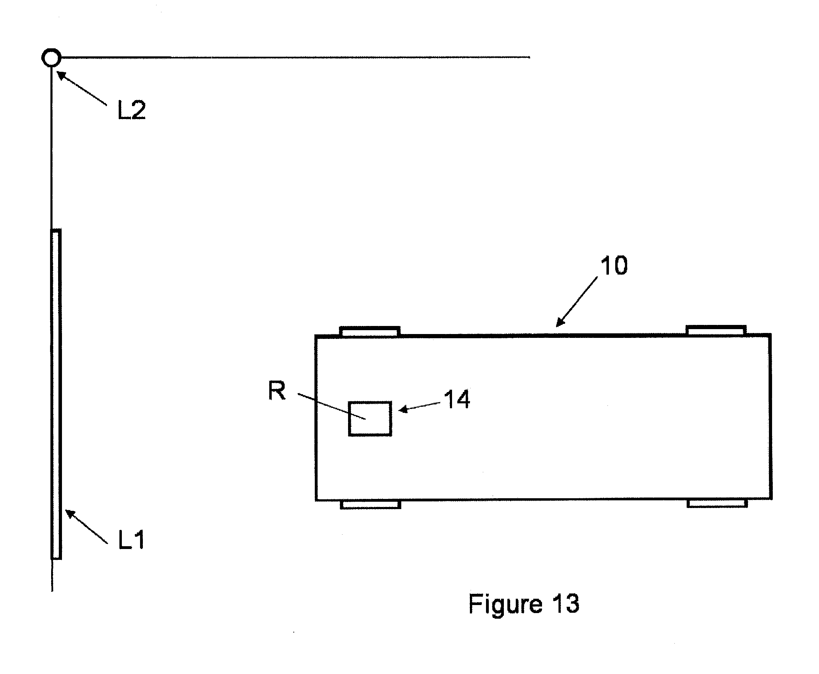

Referring now to the example illustrated in the Figures, Figure 12 and Figure 13 show, respectively, a lateral and a top schematic view of a robot 10 according to the present invention, which is able to autonomously navigate within a given environment. In order to allow a simultaneous localization and mapping process of a mobile robot 10, the aforementioned robot 10 must be able to recognize environmental features. The aforementioned features, henceforth referred to as landmarks, can be divided into natural landmarks L, i.e., preexisting segments L1, corners L2 and objects O in the environments, and artificial landmarks L, i.e., objects purposively designed and realized to be recognized by the sensory system of a robot 10.

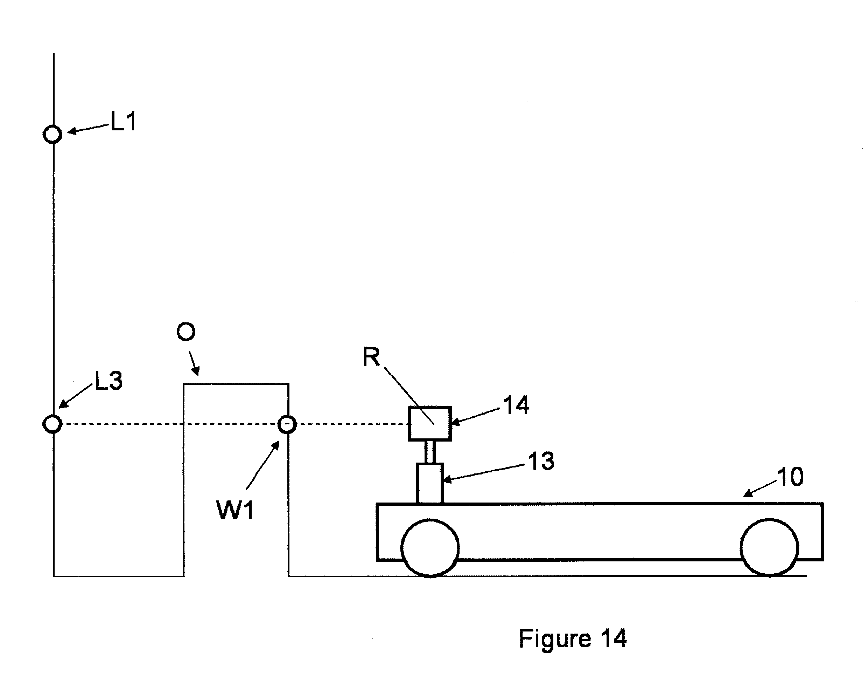

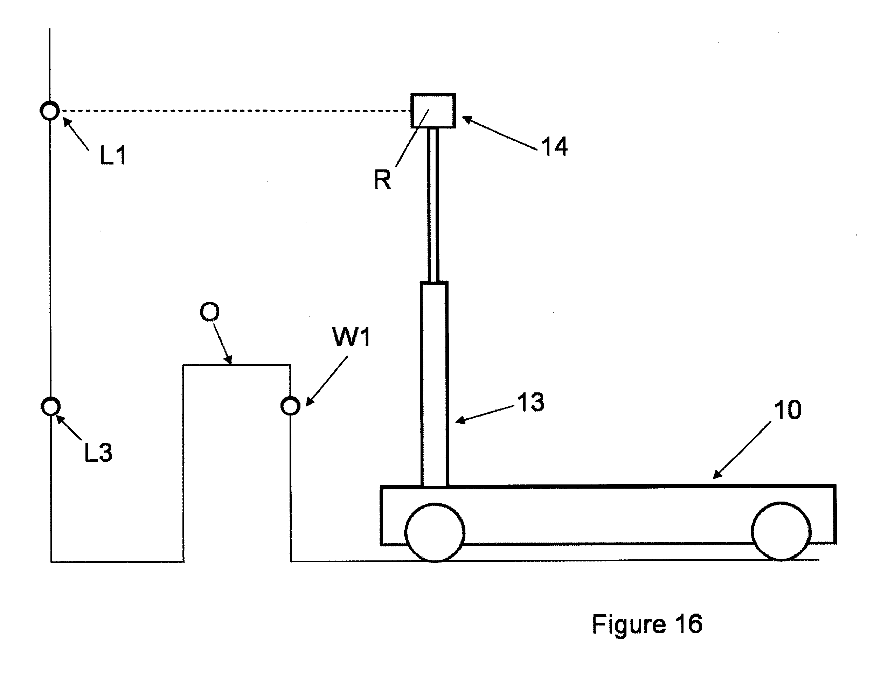

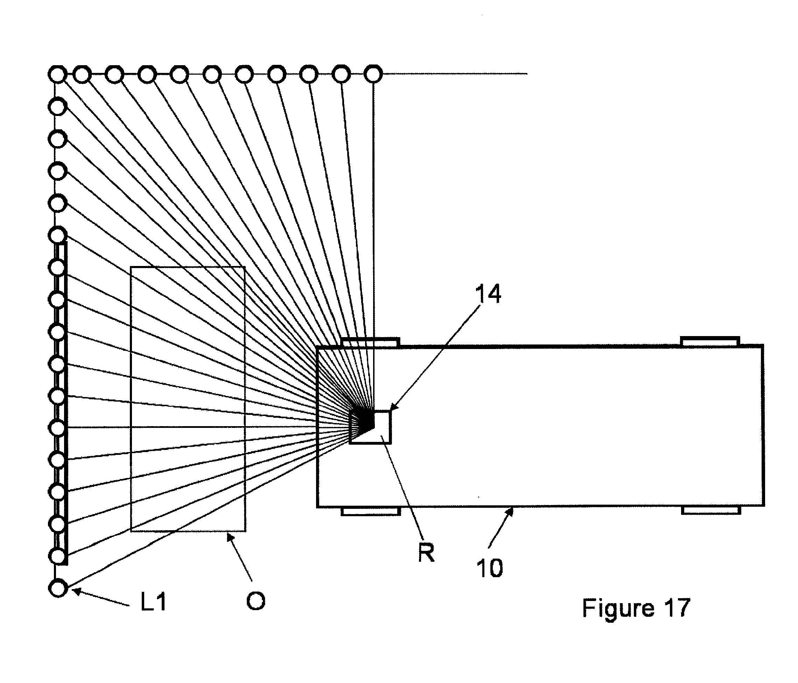

In order to navigate within the environment, robot 10 is provided with at least two wheels, preferably four, which are connected to at least an engine. Furthermore, encoders which are linked to the wheels' axes or to the engine fixture can be assumed to be available, in order to measure the rotation speed of the wheels and/or the steering wheel orientation. In order to avoid either expected or not, either static or moving obstacles O, (see Figure 14 to 17), the aforementioned robot 10 is provided with a sensing device to detect physical features of a two-dimensional or three-dimensional environment, in particular artificial or natural landmarks L.

Odometry-based measurements which are obtained through the encoders can be combined with absolute measurements referring to the robot 10 pose, which are obtained through the sensing device, which is subject to this invention such that it possible to determine with major accuracy the robot 10 pose within the environment, to determine the most promising scanning place for the aforementioned optical sensing device R, which is located within the so-called head 14 which height depends on the vertical elongation of the supporting axis 13, thus reducing the landmark L search space and locating landmarks L reasonably distant from each other.

Referring to Figure 12, the sensing device which is subject to this invention is made up of an optical scanning sensor R, which is located within the aforementioned head 14, combined with a supporting axis 14 which can modify the height at which the head 14 is located.

The sensing device that is subject of this invention adopts an optical scanning sensor, a so-called laser rangefinder R, which is located within the head 14, and which can be placed at different heights with respect to the ground floor through operating a supporting axis 13. The aforementioned sensor R can be used in different ways, usually always with the scanning plane lying on the horizontal plane and/or parallel to the ground, and at different heights, according to the objects which have to be detected. Specifically, these objects are landmarks L which detection is fundamental for successfully performing simultaneous localization and mapping, or obstacles O which detection and wrong association with previously mapped features in the map can invalidate the localization process. Often, such a sensor can be used to detect situations of potential crashes against obstacles O, and therefore it is located just above the ground or at the center of the main robot 10 body. As a consequence, it seems that such an optical scanning sensor can serve for two different purposes, the former being a successful pose estimation process, where features must be detected avoiding wrong data association caused by the presence of obstacles ο, whereas the latter deals with obstacle ο avoidance, where obstacles ο which are not present in the map must be correctly detected and recognized.

With respect to the first purpose, it is evident that the detection of obstacles ο and their wrong association with respect to features, otherwise landmarks L, which are present in the map, may lead to unrecoverable localization errors.

As everyday evidence suggests, human populated environment, both indoor and outdoor, are "more stable" and "simpler" over a given height from the floor. This commonsense fact has obvious consequences when an optical scanning device, otherwise the aforementioned laser rangefinder R, detects either natural or artificial landmarks L. Over a given height, if the work is geometrically "simpler" and "stable", feature detection and association can be considered easier. In such a situation, several drawbacks previously discussed concerning occluding objects and other similar obstacles are overcome. Each landmark L, if detected over a given height, is -- in a sense - "more trustable", since the probability errors due to wrong feature association with respect to a map are kept to a minimum.

Intuitively, a simple environment originates a profile that can be considered smooth as detected by the laser rangefinder: this leads to extracted lines which are longer and more trustable, since they are composed by a greater amount of data points.

By profitably changing the scanning plane, for example by changing the height of the optical scanning device R, which is located within the head 14, mounted on top of a supporting axis 13 which can be dynamically operated, the effect of dynamically changing and unmodeled features L, otherwise obstacles ο, is expected to become negligible, until reaching the situation in which feature association is a trivial task even when the environment is crowded for the presence of people and other similar objects ο.

Intuitively, a simple environment originates a profile, as detected by the aforementioned optical sensing device R, that can be considered "smooth" according to a given measure of roughness: this leads to a smaller number extracted features, otherwise landmarks L, which are more trustable. In addition, a smaller set of features, otherwise landmarks 14, is expected to substantially reduce the complexity of maintaining a coherent map of the workspace, which is especially significant when performing simultaneous localization and mapping.

On the contrary, with respect to the second purpose, it is evident that it is fundamental for a mobile robot 10 to be able to detect unexpected obstacles ο, since a fundamental prerequisite for autonomous navigation is to be able to safely navigate in the robot 10 workspace. As a consequence, this invention proposes a device which can be used both to detect unexpected obstacles in the workspace and to reliably detect features in the environment, by opportunely modifying the height at which obtain laser rangefinder R profiles.

With respect to the device which is subject of this invention, to find such a profitable scanning plane (i.e., a two-dimensional cross-section of the three-dimensional workspace) requires to find a suitable height at which to locate the optical scanning device, otherwise the laser rangefinder R, through positioning the head 14 using the variable height of the supporting axis 13, according to a given measure of roughness of the workspace profile surrounding the robot 10. When searching for feature, otherwise landmarks L, if a given measure of profile roughness indicates the impossibility of a reliable detection, the head 14 can be positioned at a more suitable height, whereas, when navigating in the environment, obstacle avoidance can be realized by opportunely position the head 14 to a height where unexpected obstacles ο are likely to be present in the workspace.

It becomes then fundamental to define a method to establish the aforementioned measure of quality, otherwise called measure of roughness for a given profile in the workspace, as detected by the laser rangefinder R. The method which is part of this invention accounts for this measure by analyzing the data provided by the optical scanning device, otherwise laser rangefinder R, at searching for a laser scanning plane which minimizes this measure when performing feature, otherwise landmark L detection and association, alternatively maximizing it when dealing with obstacles ο in the workspace.

In the laser rangefinder R, a collimate beam rotates on a plane according to an angle comprised between 90 and 270 degrees, in particular with an angle of 180 degrees. The aforementioned radius, hitting the surfaces of objects ο which are present within the environment and located within a range that is comprised, for example, between 10 cm and 50 meters, is able to measure the distance using interferometer-based, otherwise convolution-based techniques, or similar, and/or the positioning heading of the robot 10 with respect to the aforementioned objects ο.

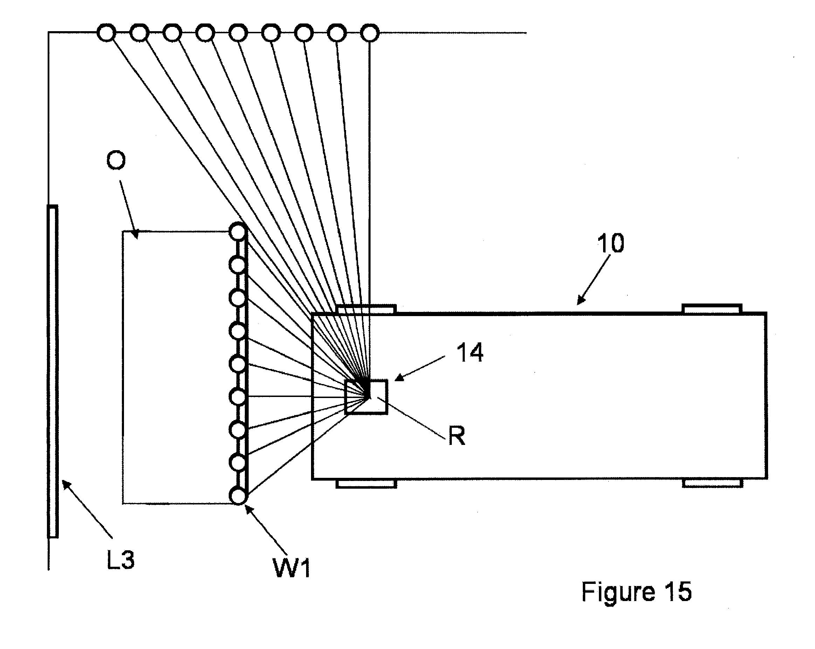

Referring to Figure 15, through the aforementioned optical scanning device, otherwise laser rangefinder R, two measurements for each visual degree are taken, and the angle between the two consecutive measurements is computed. All the angles belonging to the same part of the wall, segment or obstacle ο are characterized by similar values and viceversa. The scanning frequency imposes the speed for acquiring new data, and it can range from few Hz to dozens of Hz. The measurement precision of the aforementioned laser rangefinder R is in the order of magnitude of centimeters, in particular, it less that 1cm or slightly more, whereas the angular resolution ranges between tenth degrees and a few degrees. On the basis of these measurements and of a known map including the profiles of known objects in sight, it is possible to reconstruct the relative position of the mobile robot 10 with respect to the map itself.

In order to obtain the aforementioned described advantages and to reduce the probability of wrong feature association, thus allowing a mobile robot 10 to successfully and reliably navigate within its workspace, in this invention the aforementioned optical scanning device, otherwise laser rangefinder R is placed on the top of a supporting axis 13, which is located on the mobile robot 10 itself, and which geometrical distance with respect to a mobile robot 10 centered reference frame is kept constant, and which can be operated in order to vary the height at which the head 14 is located with respect to the ground floor. The height at which the head 14 is positioned by the supporting axis 13 is decided on the basis of the aforementioned measure of quality, otherwise a measure of roughness of the environment profile of the workspace surrounding the optical scanning sensor, otherwise laser rangefinder R.

This invention assumes that the optical scanning device is located in that part of the mobile robot 10 which is usually called head 14, and which hosts the aforementioned optical scanning sensor, otherwise the laser rangefinder R, such that to actively contribute to the robot navigation and to its interaction with objects located in the environment.

The head 14 hosting the optical scanning device, otherwise the laser rangefinder R, is carried out by a structural supporting element 13 which is linked either in a fixed or in a movable way to the body of the mobile robot 10. The structural supporting element 13 allows the head 13 to translate along the vertical axis with respect to the aforementioned mobile robot 10 body.

In particular, this structural supporting element 13 is made up of a pole which height is variable, which allows to position the head 14 along with the hosted sensor R at the desired height with respect to the navigation plane or surface, according to a defined measure of quality, i.e., at the height that is considered most suitable to avoid the interaction of the laser beam with respect to fixed or moving, living and/or non-living obstacles which are present within the environment, when performing localization; alternatively, at the height that is considered most suitable to detect through the laser beam unexpected obstacles ο, either fixed or moving, living and/or non-living, which are present within the workspace.

It is possible to notice that, in human inhabited environments, where the presence of the aforementioned robot 10 can be necessary or desirable, the concentration of objects which are useful to the fulfillment of a whatsoever task is at its maximum in the range that is comprised between the ground and the mean height of a human being, and the aforementioned concentration diminishes as long as height increases, thus leaving the ranges which can be reached by a human being of a mean height without the use of devices, such that stairs, chairs, or similar.

It is possible to assume that the origin of the laser beam generated by the aforementioned optical scanning device, otherwise the laser rangefinder R, is located on the same vertical line passing through the head 14 supporting axis 13. Alternatively, it is possible to assume that the origin of the laser beam generated by the aforementioned optical scanning device, otherwise the laser rangefinder R, is located in a position which slightly protrudes with respect to the head 14 supporting axis 13, subject to the fact that the geometrical Cartesian displacement between this origin and the mobile robot 10 centered reference frame is accurately known.

In particular, the head 14 and the supporting axis 13 are operatively and mechanically associated such that a lengthening of the supporting axis 13 corresponds to a vertical displacement of the head 14, and a corresponding displacement of the optical scanning device, otherwise of the laser rangefinder R.

Specifically, the aforementioned head 14 host the optical scanning device, otherwise the laser rangefinder R. Furthermore, the aforementioned head is mechanically linked to the supporting axis 13. In a preferred executive form that is depicted in Figure 12, the aforementioned head 14 which hosts the optical scanning device, otherwise the laser rangefinder R, is mounted on top of a supporting axis 13, which is mounted on the main mobile robot 10 part. Therefore, since the base of the supporting axis 13 can be considered horizontal, the scanning plane which characterizes the optical scanning device, otherwise the laser rangefinder R, can be assumed horizontal as well. The supporting axis 13 is characterized by a minimum and a maximum vertical extension; as a consequence, the optical scanning device, otherwise the laser rangefinder R can be placed in a height range which depends on these ends of the axis lengthening.

When the axis lengthening is at its minimum, the optical scanning device, otherwise the laser rangefinder R, is placed at a height which is given by the height of the mobile robot 10 base, plus the minimum lengthening of the supporting axis 13, plus the height of the head 14 base supporting the actual sensing device. On the other hand, when the axis lengthening is at its maximum, the optical scanning device, otherwise the laser rangefinder R, is placed at a height which is given by the height of the mobile robot 10 base, plus the maximum lengthening of the supporting axis 13, plus the height of the head 14 base supporting the actual sensing device.

In order to avoid interferences both from the physical and the mechanical perspective between the sensing device which is subject of the invention and the three-dimensional mobile robot 10 workspace, the minimum height of the aforementioned sensing device, which is given by the height of the mobile robot 10 base, plus the minimum lengthening of the supporting axis 13, plus the height of the head 14 base supporting the optical scanning device, plus the height of the optical scanning device, otherwise the laser rangefinder R, must be shorter than the lowest ceiling in the three-dimensional workspace, which occurrences can be found in such areas as door passages, entrances, elevators, and other similar workspace configurations.

In order to allow the use of autonomous mobile robots 10 in environments which are characterized by the presence of the aforementioned ceilings, door passages, elevators, and other similar workspace configurations, it is possible to assume that the height of the structural supporting axis 13 can dynamically changed such to allow for the passage of the robot 10 with the head 14 provided with sensors through doors, passages, and even obstacles which are hanged down in the environment, or similar.

Depending on the applications and on the environments where the robot 10 must operate, the height of the aforementioned head 14 neither cannot exceed values such that the movement of the robot 10 itself is compromised, for example, in order to navigate through door passages, nor such that to disturb surrounding people.

In robot 10 workspaces where human activity occurs, the mean height of low passages which are present in the environment where the robot 10 navigates, of features, otherwise landmarks L to be detected by the optical scanning device, otherwise the laser rangefinder R, and correctly associated with respect to the map for a successful localization process, is located near doors' upper edges, but always close to the doors' upper end, such that the complete height of the robot 10 is able to pass under the doors' upper end or of other obstacles.

This invention also accounts for a method able to modify the height at which the head 13, and consequently the optical scanning device, otherwise the laser rangefinder R, is located, by properly operating the length of the supporting axis 13, according to a given measure of quality of the environment profile as perceived by the laser rangefinder R in the workspace. The height of the head 14 can be modified also according to the doors height or to other obstacles which are hanged down throughout the environment where the robot 10 operates, and the corresponding landmarks at different heights can be positioned in the map and/or consequently chosen for feature, otherwise landmark L association.

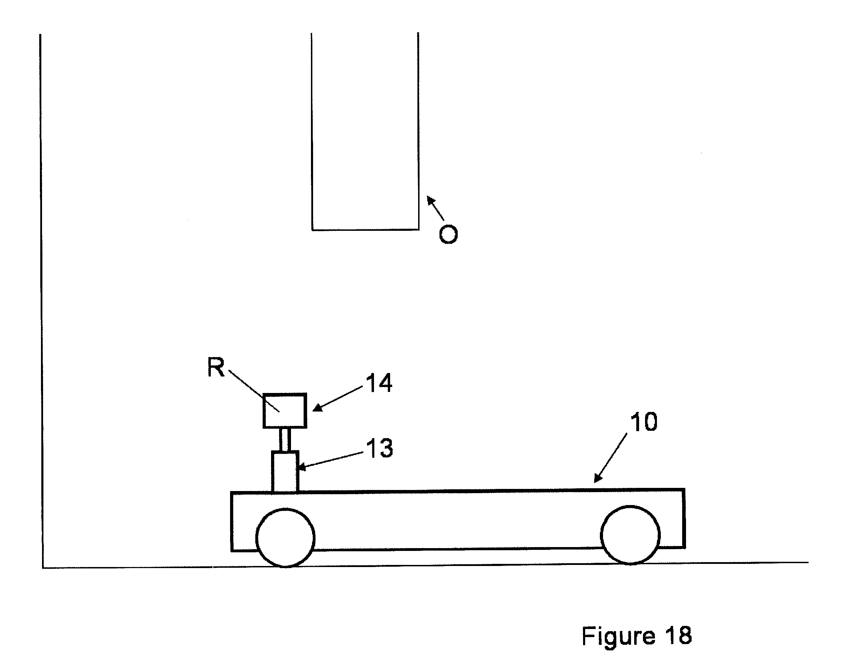

A preferred executive form assumes the availability of a structural supporting axis 13 which is bendy, such that the robot 10 passage can occur also under obstacles hanging down from the ceiling of different heights (see Figure 18). It is possible to configure the behavior of robot 10 in a way that in specific areas of the workspace, the robot 10 itself can autonomously vary the height of the head 14 in order to avoid obstacles ο and to autonomously position the head 14 back to the previous height, once the obstacle ο has been avoided.

For self-localization purposes, the laser rangefinder R requires a given number of features, otherwise landmarks L, characterized by a simple shape to be measured, otherwise known static parts of the workspace such as walls, signs, edges, and corners, to be detected and correctly associated with respect to the map; and a small number (possibly null) of objects ο which do not affect the self-localization process. In a preferred executive form, selected static parts comprise walls and other similar elements of the three-dimensional workspace which can be considered lines and segments in a two-dimensional cross-section of the workspace. On the contrary, for obstacle avoidance purposes, the laser rangefinder R requires a number of unexpected objects ο, otherwise dynamic parts of the workspace such as misplaced doors, movable objects and/or other living/non living entities, to be detected and avoided.

The height of the supporting element 13 can be modified according to the aforementioned measurement of quality, otherwise a measurement of the roughness characterizing the profile of the environment as perceived by the optical scanning device, otherwise the laser rangefinder R. To explore and compare different heights for the laser rangefinder R, an indicator is used, which aim is to quantify the tendency of range data, as provided by the optical scanning device, otherwise the laser rangefinder R, to lie on the same line (i.e., their spatial frequency), and to be stationary with respect to perspective of the laser rangefinder R (i.e., their temporal frequency). It is worth noting that a "good" indicator is meant to measure an intrinsic property of the two-dimensional workspace, and therefore considering raw range data yields more general results, thus being independent from the particular algorithm and the parameters adopted for scan segmentation and feature extraction.

In a preferred executive form, the "unevenness index" has been selected. Unevenness measures and the fractal degree are commonly used to measure the length and the complexity of shore profiles, and they can be reasonably applied to quantify the regularity of a given workspace profile. The unevenness index at a given time instant is provided by the superimposition between the length of the polyline connecting all the raw scan points belonging to the two-dimensional cross-section of the workspace, and the length of the segment located between the first and the last scan point, which is commonly referred to as the "chord" of the polyline.

A simple analysis of the aforementioned "unevenness index" confirms that its behaviour is adequate for the indicator to be suitable to act as a measure of quality of the scan profile: 1) the "unevenness index" is an ordered indicator: the more the profile is rough, higher the value of the indicator; 2) High values for the indicator correspond to a high disparity between contiguous range measurements, whereas low values are detected if scan points are almost collinear.

It is possible to expect that, when scanning a two-dimensional cross-section of the three-dimensional workspace where obstacles ο are present, the indicator is bigger: as a consequence, the cross-section is not suitable to perform self-localization, and the head 14 hosting the optical scanning device, otherwise the laser rangefinder R must be located at a different height. Alternatively, when scanning a two-dimensional cross-section of the three-dimensional workspace where obstacles ο are not present, the indicator is lower: as a consequence, the cross-section is suitable to perform self-localization, and the head 14 hosting the optical scanning device, otherwise the laser rangefinder R can be kept at the current height.

Measurements originating from the optical scanning device, otherwise the laser rangefinder R, and from odometry measurements provided by the aforementioned encoders associated with the mobile robot 10 wheels, can be combined through a proper mathematical model in different ways in order to obtain a good robot localization, which is functional to its autonomous navigation capabilities.

With a "proper mathematical model" a whatsoever mathematical or statistical model is referred to, otherwise computational algorithm, for example in a referred executive form the KALMAN model or KALMAN filter is profitably used. The KALMAN filter is a well-known algorithm that is used to filter measurements on the basis of a reasoned and a proper mean between the next predicted values and the next estimated value. This filter is often used to obtain a better estimation of a quantity that is obtained from the readings of several sensors, each one characterized by a measurement noise with different and time-varying characteristics (and therefore in the frequency domain as well). Further information about the KALMAN filter or KALMAN model can be retrieved in the scientific literature, in particular in "An introduction to the Kalman filter" (Department of Computer Science University of North Carolina at Chapel Hill TR 95-041), otherwise in the on-line encyclopedia WIKIPEDIA (www.wikipedia.org).

Alternatively or in combination, it is possible to use Bayesian methods, which scientific description can be retrieved from the on-line encyclopedia WIKIPEDIA (www.wikipedia.org), or in scientific textbooks, and/or different statistical techniques, such as methods for computing the error and/or methods for perturbation calculus which are commonly used in both mathematical and physical fields.

It is clear also form the above, that the method and device according to the embodiment of figures 1 to 5 can be provided either separately or in combination with the embodiments of figures 6 to 11 and/or 12 to 18. Each one of the said embodiments of figures 6 to 11 and 12 to 18 can be provided separately from the other examples or the features of the said embodiments according to figures 6 to 11 and 12 to 18 can be provided also in combination one with the other.

From what has been previously described, the advantages of this invention are therefore clear. Notwithstanding the fact that the embodiments have been described with respect to laser-based sensors, obviously this invention is not limited to the aforementioned embodiments, which have been previously described and depicted, but it can largely extended, above all from an implementation perspective, without losing the previously described general principle which is claimed as follows.

## Claims

1. A sensing device for detecting physical features of a two-dimensional and/or three-dimensional environment, which has at least an optical scanning sensor (402), **characterized in that** it allows a combination with a further optical pointing sensors (401).

2. A device according to claim 1 **characterized in that** the aforementioned optical scanning sensor (402) and the aforementioned optical pointing sensor (401) are adjacent with respect to each other, preferably at a distance from 0 to 50 cm.

3. A device according to one or more of the preceding claims, **characterized in that** the optical pointing sensor (401) is located above the aforementioned optical scanning sensor (402) such that the pointing sensor laser beam (401) can rotate for 360 degrees.

4. A device according to one or more of the preceding claims, **characterized in that** the aforementioned optical pointing sensor (401) is a pointing laser for detecting the position of artificial landmarks (12) and the optical scanning sensor (402) is a so-called laser rangefinder for detecting the position of natural landmarks.

5. A device according to one or more of the preceding claims, **characterized in that** the action plane of the pointing device (401) coincides in practice with the plane over which at least an artificial landmark (12) is located, that is present within the environment and that is recognized by the aforementioned pointing laser (401) and the action plane of the scanning sensor (402) coincides in practice with the plane over which at least a natural landmark is located, that is present within the environment and that is recognized by the scanning laser (402).

6. A device according to one or more of the preceding claims, **characterized in that** the aforementioned pointing sensor (401) is provided with a signal transmitter/receiver, such that it can send/receive signals originating from at least an active artificial landmark (12), that is present within the environment and viceversa.

7. A device according to one or more of the preceding claims, **characterized in that** it is provided with at least an artificial landmark (12), that can be detected by at least an optical pointing sensor that is present within the environment.

8. A device according to one or more of the preceding claims, **characterized in that** the aforementioned scanning sensor (402) and the aforementioned pointing sensor (401) are operatively associated such that they act upon two planes coincident in practice or slightly displaced.

9. A device according to one or more of the preceding claims, **characterized in that** it is located on board of an autonomous mobile robot (1) in order to allow for its localization within both indoor and outdoor environments, preferably on that part of the robot that is commonly called head (14), i.e., on that part of the robot (10) that carries either the sensors or devices to send and/or receive information to/from the environment,
being the pointing sensor (401) and the scanning sensor (402) both comprises within the head structure (14) and/or, the laser origins located on the same vertical line.

10. A device according to one or more of the preceding claims, **characterized in that** the scanner sensor (402) is positioned outside, protruding with respect to the head (14) structure.

11. A device according to one or more of the preceding claims, **characterized in that** the head (4) is either fixed or movable with respect to that part of the robot (10) which usually is called body through at least a supporting element (13).

12. A device according to one or more of the preceding claims, **characterized in that** the head (14) can rotate with respect to the robot's body, through the rotation of the aforementioned supporting element (13),
being the said supporting element (13) mounted in a rotable way with respect to the robot's body and being the said supporting element (13) made up of a pole with variable length such that to position both the head (14) and the sensors (401, 402) at the desired height with respect to the robot movement surface.

13. A device according to one or more of the preceding claims, **characterized in that** the pointing sensor (401) and the scanning sensor (402) are positioned at an elevation ranging from 170 and 210 cm with respect to the robot (10) movement surface, in particular at an elevation ranging from 180 and 200 cm with respect to the robot (10) movement plane.

14. A device according to one or more of the preceding claims, **characterized in that** the pointing sensor (401) and the scanning sensor (402) are positioned at an elevation that coincides in practice to the one at which natural and/or artificial landmarks are positioned.

15. A device according to one or more of the preceding claims, **characterized in that** the height of the supporting element (13) can be directly and autonomously adjusted by the robot (10).

16. A device according to one or more of the preceding claims, **characterized in that** it uses devices to send information detected by the pointing sensor (401) and by the scanning sensor (402) to a processing unit such that to allow the robot (10) localization within the environment.

17. A method for detecting the physical features of a two-dimensional and/or three-dimensional environment, and in particular, for determining the pose of the mobile robot within the environment where it operates, which assumes:
the measurement of the distance and/or the angular position with respect to one or to a number of artificial landmarks (12)
and the determination of the distance and/or the angular position with respect to natural landmarks

18. A method according to the claim 18, which is **characterized by** the fact it accounts for the placement of one or of a number of artificial landmarks within the environment, which artificial landmarks are **characterized by** a fixed position within the aforementioned environment, and the identification of objects with a given shape, position, and dimensions, which are present within the aforementioned environment, a topographic and a database-like map being generated, where all the natural landmarks, the objects and the positioning data, and/or the dimensions, and/or the geometric shape are enumerated, whereas the distance and the angular position with respect to artificial landmarks and the distance, the relative angular position, and/or shapes, and/or dimensions of natural landmarks, being those data mapped, and the detecting original position being detected, i.e., the robot position through comparison with the aforementioned map.

19. A method according to the claims 17 or 18 **characterized in that** the natural landmarks are detected through an optical scanning device, for example a so-called laser rangefinder (402) and the artificial landmarks are detected through an optical pointing device, for example a laser..

20. A method according to one or more of the preceding claims 17 to 19, **characterized in that** the artificial landmarks are provided with devices able to transmit additional information, which are activated by the detecting sensors of the artificial landmarks, whereas the aforementioned sensors are in combination with devices able to receive the aforementioned information.

21. A method according to the claim 20, **characterized in that** it assumes the availability of active artificial landmarks which are able to either receive or transmit information and commands from/to receiving/transmitting devices, which are associated with the detecting sensors of the aforementioned artificial landmarks.

22. A method according to one or more of the preceding claims 18 to 21, **characterized in that** the aforementioned optical scanning device (402) and the aforementioned optical pointing device (401) have the features described in one or more of the preceeding claims 2 and/or 3 and/or 5 and/or 8.

23. A method according to one or more of the preceding claims 17 to 22, **characterized in that** it is a method for allowing the localization both in indoor and outdoor of a robot (1) moving autonomously in its environment.
